# EUROPÄISCHE PATENTSCHRIFT

(11) **EP 2 062 770 B1**
(45) Veröffentlichungstag und Bekanntmachung des Hinweises auf die Patenterteilung: **28.12.2011**
(21) Anmeldenummer: 08169603.1
(22) Anmeldetag: 21.11.2008
(51) Int. Cl.: B60K 6/365, B60K 6/445, F16H 3/72, B60K 6/40

(54) **Antriebssystem für Kraftfahrzeuge**
Drive system for motor vehicles
Système d'entraînement pour véhicules automobiles

(30) Priorität: 23.11.2007 AT 19042007
(43) Veröffentlichungstag der Anmeldung: 27.05.2009
(73) Patentinhaber: hofer forschungs- und entwicklungs GmbH, 4451 Garsten (AT)
(72) Erfinder: Aitzetmüller, Heinz, Dipl.-Ing., 4817, St. Konrad (AT); Flachs, Reinhard, Ing., 4083, Wilhering (AT); Hofer, Markus, Ing., 4451, Garsten (AT); Hofer, Johann Paul, 39057, Girlan (IT); Stöckl, Dieter, Ing., 4400, Steyr (AT)
(74) Vertreter: Cremer, Christian

(56) Entgegenhaltungen:
- EP-A- 1 142 744
- EP-A- 1 702 781
- EP-A- 1 777 091
- WO-A-2006/051403
- FR-A- 2 832 356
- US-A1- 2006 247 086
- US-B1- 6 248 036

## Beschreibung

Die Erfindung bezieht sich auf ein Antriebssystem für Kraftfahrzeuge, vorzugsweise motorradartiger Bauart, das eine Brennkraftmaschine und ein Summierplanetengetriebe umfasst. Weiterhin bezieht sich die Erfindung auf ein Verfahren zum Betreiben eines erfindungsgemäßen Antriebssystems.

Aus dem im Prioritätszeitraum veröffentlichten österreichischen Patent AT 504 432 B1 der Anmelderin der vorliegenden Erfindung geht ein Triebwerk für ein Kraftfahrzeug, vorzugsweise Motorrad, hervor, das eine Brennkraftmaschine und ein eine Hydrostateinrichtung aufweisendes Getriebe umfasst, welches Getriebe zu einer Abtriebswelle führt. Die Hydrostateinrichtung steht in Wirkverbindung mit einem Summierplanetengetriebe, das mit der zum Antrieb des Motorrads dienenden Abtriebswelle zusammenarbeitet.

Die EP 1 084 049 B1 behandelt ein Motorrad mit Hybridantrieb und Bremsenergierückgewinnung. Dieser Hybridantrieb besteht aus einer Vier-Zylinder-Maschine und einer umschaltbaren elektrischen Maschine, die mit der Vier-Zylinder-Maschine durch synchronisierte Kupplungen verbunden ist. Außerdem sind Energiespeichermittel, die mit der genannten umschaltbaren Maschine zusammenarbeiten, und eine Steuerschaltung für den Antriebsprozess vorgesehen.

Aus der EP 0 445 873 B1 geht ein hybrides Antriebssystem hervor. Das Antriebssystem bedient sich einer Brennkraftmaschine und eines Elektromotors. Die Brennkraftmaschine wirkt über ein stufenloses Getriebe und Kupplungen auf ein Antriebsrad ein. Der Elektromotor treibt einen Stirnradantrieb an, der ebenfalls besagtes Antriebsrad beeinflusst.

In dem Handbuch des Vieweg-Verlags, Handbuch Kraftfahrzeugtechnik, 3. Auflage, September 2003 werden auf Seite 139 Grundkonzepte von Hybridantrieben behandelt, und zwar ein serieller Hybrid, ein paralleler Hybrid und ein Misch-Hybrid.

Die vorteilhafte Nutzung von Antriebskombinationen unter summierender Zwischenschaltung von Planetengetrieben lässt sich sowohl der WO 2006 051 403 A1 als auch den zahlreichen Ausführungsformen aufgeschalteter Elektromotoren auf einem Antriebsstrang einer Verbrennungskraftmaschine nach FR 2 832 356 A1 entnehmen. Die FR 2 832 356 A1 zeigt in ihren Ausführungsbeispielen, wie drei unterschiedliche Arten von Summierplanetengetrieben bzw. Planetengetrieben wahlweise an den gleichen Stellen eingesetzt werden können. Eine kompakte konstruktive Lösung für die Gestaltung von Summierplanetengetrieben zusammen mit einem elektrischen Generator lässt sich in der Figur 2 der EP 1 777 091 A1 betrachten.

Auf solchen Erkenntnissen aufbauend werden in der US 2006 247 086 A1 zahlreiche hybridisierte Antriebssysteme mit Verbrennungskraftmaschine und einer Generator-Elektromotor-Kombination betrachtet. In Figur 49 wird die eine Seite der Verbrennungskraftmaschine abtriebsseitig als Antriebswelle für einen über einen Kettentrieb angebundenen Generator genutzt, während die Hauptabtriebsrichtung über eine kupplungsbehaftete Welle auf Zahnradübersetzungsstufen und einen mechanischen Variator erfolgt.

In der gattungsbildende US 6 248 036 B1 ist ein Antriebssystem mit einer Pluralität von Kraftmaschinen und damit verbundenen Differenzialmechanismen beschrieben, wobei ein Getriebe des Antriebssystems Mechanismen zur Aufteilung von Energie der Kraftmaschinen zwischen den Differenzialmechanismen und zum Ausbringen von Energie aus diesen Differenzialmechanismen einschließt.

Die EP 1 702 781 A behandelt einen Hybridantrieb mit einer Kraftmaschine, einem Elektrogenerator, einem Elektromotor und einem Energieverteiler. Um das hybridisiertes Antriebssystem mit Mechanismen zur Aufteilung von Energie zwischen der Kraftmaschine, dem Generator und dem Motor in einem eng eingeschränkten Bauraum eines Motorrads oder eines ähnlichen Fahrzeugs zu unterbringen, schlägt die EP 1 702 781 A vor, den Generator, den Motor und den Verteiler von Energie auf einer gesonderten Welle anzuordnen, die im Wesentlichen parallel zur Kurbelwelle der Kraftmaschine verläuft.

Entkoppeltere Systeme zwischen zwei Elektromotoren in Verbindung mit einer Verbrennungskraftmaschine lassen sich sowohl der EP 1 142 744 A1 als auch der US 6 248 036 B1 entnehmen. Die Leistung der Elektromotoren wird wiederum über Planetengetriebe auf eine gemeinsame Abtriebswelle aufgeschaltet. Um bei solchen Systemen Verspannungen in den Abtriebswellen aufgrund von ungleichmäßigen Antrieben zu vermeiden, ist besonderer Bedacht an die synchrone Ansteuerung und Leistungsidentität der Elektromotoren zu richten. Zu jedem Elektromotor gehört ein eigenes Planetengetriebe, somit werden im Ergebnis spiegelbildlich die doppelten Einheiten mitgeführt.

Es ist Aufgabe der Erfindung, ein Antriebssystem für ein Kraftfahrzeug so auszubilden, dass es sich bei Einsatz einer Brennkraftmaschine und entsprechenden Getriebevorrichtungen durch vielfältige Funktionen und vorbildliche Kraftstoff-Emissions- und Verbrauchseigenschaften auszeichnet. Dabei sollte aber sichergestellt werden, dass das Antriebssystem betriebssicher arbeitet. Auch ist ein geeignetes Betriebsverfahren wünschenswert.

Nach der Erfindung wird diese Aufgabe durch die Merkmale des Patentanspruchs 1 gelöst. Das in Anspruch 11 vorgestellte Verfahren schafft eine Betriebsweise zur Annährung eines Antriebssystems an die erfindungsgemäße Aufgabe. Weitere, die Erfindung ausgestaltende Merkmale sind in den Unteransprüchen enthalten.

Die mit der Erfindung hauptsächlich erzielten Vorteile sind darin zu sehen, dass dank des Maßstäbe setzenden elektrischen Variators eine stufenlose Übersetzungsverstellung im Getriebebereich des Antriebssystems realisierbar ist. Dabei ist ein rein elektrischer, nahezu geräuschloser, emissionsfreier und kraftstoffarmer Betrieb des Antriebsystems bei relativ niedriger Geschwindigkeit des Kraftfahrzeugs möglich, d. h., letzteres kann auch bei Ausfall der Brennkraftmaschine genutzt werden. Vorteilhaft ist auch, dass ein Fahrtrichtungswechsel des Kraftfahrzeugs ohne Kupplung erfolgen kann und der Getriebebereich bei Kriechgeschwindigkeiten ohne schleifende Kupplung arbeitet. Aufgrund der musterhaften beanspruchenden Konzeption des elektrischen Variators und dessen Zusammenwirken mit dem mechanischen Getriebebereich steht eine zusätzliche Beschleunigungsleistung - Boostleistung - zur Verfügung und es ist auch eine Rückgewinnung der Bremsenergie des Kraftfahrzeugs darstellbar. Hervorzuheben ist darüber hinaus, dass die Brennkraftmaschine in günstigen Kennfeldern betrieben werden kann und dass über den Generator ein Schnellstart der besagten Brennkraftmaschine durchführbar ist. Außerdem ist der gute Gesamtwirkungsgrad durch geringe elektrische Leistung über große Übersetzungsbereiche des einen geringen axialen Bauraum beanspruchenden Variators erwähnenswert.

Schließlich werden mit dem Antriebssystem noch folgende Vorteile erzielt: Ein mechanischer Rückwärtsgang kann entfallen, bei Nutzung der Überbrückungskupplung kann der Getriebebereich rein mechanisch betrieben werden - Reduktion von Verlusten im elektrischen Variator - und der elektrische Speicher wird bei Betrieb des Kraftfahrzeugs im Blindleistungsbereich (im Sinne von Teillastbereichen) aufgeladen.

Das Antriebssystem lässt sich in Kraftfahrzeugen einsetzen. Das Antriebssystem ist Teil eines Kraftfahrzeugs. Das Verfahren und das Antriebssystem lassen sich in einem Kraftfahrzeug benutzen bzw. verwenden. Ein solches Kraftfahrzeug kann ein Motorrad sein, also motorradartiger Bauart sein. Das Antriebssystem umfasst eine Brennkraftmaschine und ein Summierplanetengetriebe. Von der Brennkraftmaschine führt eine Übertragungswelle weg, die zumindest ein Übertragungsgetriebe beeinflussen kann. Unter dem Begriff "Beeinflussen" im Sinne der vorliegenden Erfindung wird eine Kraft- und/oder Drehzahleinwirkung auf das Übertragungsgetriebe verstanden. Das Übertragungsgetriebe hat ein erstes Getrieberad und ein zweites Getrieberad. Durch die Übertragungswelle werden Umdrehungen auf das das Antriebssystem aufweisende Übertragungsgetriebe erzeugt. Das Übertragungsgetriebe steht in Wirkverbindung - idealerweise in unmittelbarer Wirkverbindung über mechanische Verbindungselemente wie Wellen und Koaxialwellen - mit dem Summierplanetengetriebe. Das Summierplanetengetriebe arbeitet mit einem stufenlosen Getriebe zusammen. Das stufenlose Getriebe wird durch einen Variator realisiert. In einer Ausgestaltung kann der Variator ein hydrostatischer Variator sein. In einer weiteren Ausgestaltung kann der Variator ein Flügelzellenvariator sein. In einer weiteren Ausgestaltung ist der Variator ein elektrischer Variator. Der Variator nimmt eine Leistung auf der einen Seite auf und gibt auf der anderen Seite eine Leistung mit veränderter Drehzahl-ab.-Teil der Leistung lässt sich zwischenspeichern. Hierzu hat der Variator einen Speicher, z. B. einen hydraulischen, einen elektrischen oder mechanischen Speicher. Mechanisch am einfachsten lässt sich ein elektrischer Variator realisieren. Besonders bevorzugt wird die Erfindung am elektrischen Variator erklärt. Der Variator umfasst einen Generator. Weiterhin umfasst der Variator einen Elektromotor. Elektromotor und Generator sind durch eine elektrische oder mechanische Verbindung zu einem Variator ausgebildet. Der Generator ist mit dem ersten Getrieberad des Übertragungsgetriebes und der Elektromotor mit einem Sonnenrad des Summierplanetengetriebes gekoppelt. In dieser Form lassen sich unterschiedliche Leistungsstränge ausbilden, die parallel betrieben werden können. Die von der Brennkraftmaschine abverlangte Leistung lässt sich an einen Zwischenspeicher in Form von elektrischer Energie weiterleiten. Auf diese Art kann die Brennkraftmaschine in vorteilhaften Betriebspunkten betrieben werden.

Das Sonnenrad des Antriebssystems bzw. des Planetengetriebes im Antriebssystem kämmt mit einem Planetenrad. Beide Räder sind in einem kämmenden Eingriff. Das Planetenrad ist von einem Hohlrad umgeben und mit letzterem steht es im Eingriff. Die Anordnung schafft eine kompakte, in einer Ebene nebeneinander angeordnete, Vorrichtung als Planentengetriebe. Das Antriebssystem lässt sich gut ineinander verschränken. Die einzelnen Komponenten des Antriebssystem können raumfüllend nebeneinander und sich gegenseitig eingreifend angeordnet werden.

Das Antriebssystem hat zwischen dem Generator und dem Elektromotor eine Invertereinrichtung angeordnet. Die Invertereinrichtung ist in einem elektrischen Sinne bzw. schaltungstechnisch gesehen zwischen Generator und Elektromotor angeordnet. Die Invertereinrichtung ist elektrisch an den Generator und den Elektromotor angebunden. Es besteht eine elektrische Verbindung.

Die Invertereinrichtung des Antriebssystems lässt sich gruppenmäßig aufteilen. Die Invertereinrichtung hat wenigstens einen ersten Inverter und einen zweiten Inverter. Ein Inverter ist für die Erzeugung einer Spannung eines Spannungszwischenkreises zuständig. Der zweite Inverter ist für die Umsetzung der Energie aus dem Spannungszwischenkreis in den Elektromotor zuständig. Auf der Ebene des Spannungszwischenkreises lässt sich überschießende Energie in einen elektrischen Speicher abzweigen. In den Fällen, in denen die Energie aus der Brennkraftmaschine über den Generator nicht für die Abtriebswelle ausreicht, kann zusätzliche Energie in den Spannungszwischenkreis aus dem elektrischen Speicher eingespeist werden.

Zur Energieverteilung, Energiespeicherung und Energieanpassung ist wenigstens einer der beiden Inverter an einen elektrischen Speicher angeschlossen. Vorzugsweise sind beide Inverter an dem elektrischen Speicher angeschlossen. Der elektrische Speicher ist parallel zu den wenigstens zwei Spannungskabeln des Spannungszwischenkreises angeschlossen, sozusagen stichleitungsartig. Somit brauchen die Stichleitungen nur mit solchen Durchmessern ausgelegt zu werden, die für die Energiespeicherung und die Energieweiterleitung in den elektrischen Energiespeicher ausreichend sind. Der elektrische Hauptkreis, der eigentliche Spannungszwischenkreis, benutzt Kabel eines andersartigen Durchmessers als die Kabel zu dem elektrischen Speicher. Werden Kupferkabel verwendet, lässt sich Kupfer einsparen.

In dem Antriebssystem ist wenigstens eine elektronische Steuereinrichtung vorhanden. Eine solche Steuereinrichtung kann ein Steuergerät mit einem oder mehreren Mikrokontrollem sein. Die Steuereinrichtung steht regelungs- und messtechnisch elektrisch mit den Invertern und dem elektrischen Speicher zur Beeinflussung des Generators und des Elektromotors in Verbindung. Somit wirken elektronische Steuereinrichtung, die Inverter und der elektrischen Speicher mit dem Generator und dem Elektromotor zusammen.

In dem Antriebssystem gibt es eine Lade-/Entladekontrolleinrichtung. Zwischen dem elektrischen Speicher und den Invertern ist eine Lade-/Entladekontrolleinrichtung wirksam. Die Lade-/ Entladekontrolleinrichtung überwacht und steuert den elektrischen Speicher. Die Lade-/ Entladekontrolleinrichtung bestimmt den elektrischen Stromfluss zu und von dem elektrischen Speicher.

Das Antriebssystem umfasst eine Verbindung zwischen dem Elektromotor und dem Sonnenrad. Zwischen dem Elektromotor und dem Sonnenrad ist eine von einer Hohlwelle umgebene Antriebswelle angeordnet. Das Drehmoment des Elektromotors lässt sich so direkt auf das Sonnenrad einleiten.

Das Antriebssystem basiert auf einem. Zusammenwirken der Hohlwelle, des Hohlrads und dem Summierplanetengetriebe, insbesondere über das Hohlrad. Die Hohlwelle ist mit dem Hohlrad des Summierplanetengetriebes verbunden. Durch diese geschickte Anordnung ist eine Kraftumlenkung innerhalb des Getriebes nicht mehr vonnöten.

Das Antriebssystem ist weiterhin durch das Zusammenspiel zwischen Hohlwelle und einem Getrieberad des Übertragungsgetriebes zu beschreiben. Die Hohlwelle arbeitet mit dem zweiten Getrieberad des Übertragungsgetriebes zusammen. Das bedeutet, die Umdrehungen des zweiten Getrieberades werden auf die Hohlwelle übertragen. Somit kann durch die Mitte eines Getrieberades, also insbesondere des zweiten Getrieberades, eine der beiden Wellen durchgeführt sein. Die Hohlwelle leitet das Drehmoment des Getrieberades ebenfalls an das Summierplanetengetriebe. Auch hierdurch wird das Antriebssystem wiederum kompakter.

Zwischen Hohlwelle und Hohlrad kann eine Kupplungseinrichtung vorgesehen sein. Das bedeutet, soll zum Beispiel kein oder nur ein reduziertes Drehmoment aus dem Übertragungsgetriebe in das Summierplanetengetriebe eingeleitet werden, so lässt die Kupplungseinrichtung ein Abkoppeln, ein teilweises Zukoppeln oder eine komplette Übertragung zu.

Eine Abtriebswelle führt aus dem Antriebssystem heraus. An der Abtriebswelle lassen sich weitere Bauteile und Verbraucher anschließen. Die Abtriebswelle ist mit einem Planetenträger für das Planetenrad verbunden. An der Abtriebswelle lässt sich teilweise unabhängig von dem Drehmoment der Brennkraftmaschine ein einstellbares Drehmoment abgreifen.

Das Hohlrad des Summierplanetengetriebes steht in Verbindung mit einer Festsetzeinrichtung. Das Hohlrad und die Festsetzeinrichtung können so zusammenarbeiten. Die Festsetzeinrichtung kann das Hohlrad festsetzen. Das Hohlrad verliert seinen Drehfreiheitsgrad.

Für die Festsetzeinrichtung kommen unterschiedliche Bauarten in Betracht. Die Festsetzeinrichtung kann durch eine Reibungsbremse oder durch eine Sperrklinkeneinrichtung gebildet werden. Ähnlich funktionierende Sperreinrichtungen können ersatzweise oder ergänzend verwendet werden. Wichtig ist, dass die Festsetzeinrichtung genügend Sperrmoment aufbringen kann, um das Hohlrad bei Wunsch komplett festzusetzen und sich dieses nicht mehr losreißen kann. So lässt sich das Hohlrad sperren. In dem Fall wird das gesamte Drehmoment an der Abtriebswelle aus dem Elektromotor zur Verfügung gestellt. Die hybridisierende Einrichtung kann wahlweise aus einem Verbrennungsvorgang und aus elektrischen Energiespeichern die notwendige Bewegungsenergie beziehen.

Das Antriebssystem kann mehrere Kupplungen umfassen. Auch kann eine einzelne Kupplungseinrichtung mehrere unterschiedliche Kupplungen umfassen. So kann die Kupplungseinrichtung eine Anfahrkupplung und eine Überbrückungskupplung umfassen. Die Anfahrkupplung wird gerne beim Start des Antriebssystems verwendet. Die Überbrückungskupplung sorgt für eine Aufteilung des Drehmoments, insbesondere aus dem Variator, auf das Hohlrad und das Sonnenrad.

In dem erfindungsgemäßen Antriebssystem lässt sich die Anfahrkupplung an zahlreichen Stellen des Antriebsstrangs anordnen. So kann die Anfahrkupplung zwischen zweitem Getrieberad des Übertragungsgetriebes und dem Hohlrad des Summierplanetengetriebes wirksam sein. Knapp bzw. unmittelbar vor dem Summierplanetengetriebe werden die einzelnen Antriebsstränge in das Summierplanetengetriebe über die Kupplungen wie die Anfahrkupplung eingeleitet.

Das Antriebssystem bietet zahlreiche Stellen für die Anordnung der Überbrückungskupplung. Die Überbrückungskupplung lässt sich zwischen Elektromotor und zweitem Getrieberad des Übertragungsgetriebes ansiedeln. Die Überbrückungskupplung arbeitet zwischen Elektromotor und zweitem Getrieberad. Die Überbrückungskupplung ist für das Freikuppeln eines der Antriebsstränge zuständig. So lässt sich die Drehmomentverteilung und Drehmomenterzeugung beliebig auf die unterschiedlichen Antriebsstränge aufteilen. In einer alternativen Ausgestaltung werden mittels der Überbrückungskupplung die Drehmomente aus den unterschiedlichen Antriebssträngen einstellbar an das Summierplanetengetriebe weitergeleitet. Die Kupplungsbetätigung bestimmt die Einstellung zwischen den Antriebssträngen.

Die Kupplungen können Lamellenkupplungen sein. Lamellenkupplungen arbeiten zuverlässig. Somit kann das Antriebssystem mit einer Lamellenkupplung aufgebaut werden. Die Lamellenkupplung setzt sich aus mehreren Lamellen zusammen. Die Lamellen können nebeneinander angeordnet sein. Die Lamellenkupplung ist also aus mehreren, nebeneinander angeordneten Lamellen aufgebaut. So lässt sich ein entsprechend hohes Drehmoment über die Lamellenkupplung bei entsprechender Lebensdauer der einzelnen Komponenten des Antriebssystems übertragen. Die Kupplungseinrichtung kann mehrfach oder einfach vorhanden sein. Im Sinne von bauteilsparender Ausgestaltung kann sie die einzige Kupplungseinrichtung in dem Antriebssystem sein. Zwischen der Übertragungswelle und dem ersten Getrieberad kann die Kupplung angeordnet sein. Die Übertragungswelle kann mit der Kurbelwelle identisch sein. Sie kann auch Teil der Kurbelwelle sein. Alternativ kann die Übertragungswelle an die Kurbelwelle angeflanscht sein. In einer Ausgestaltung kann die wenigstens eine Lamellenkupplung zwischen einer Kurbelwelle, wie zum Beispiel der Übertragungswelle der Brennkraftmaschine, und dem ersten Getrieberad angeordnet sein. Dadurch ist vorzugsweise die Brennkraftmaschine von dem restlichen, womöglich mehrere Antriebsstränge umfassenden, Antriebssystem abkuppelbar. Die Brennkraftmaschine kann zum Beispiel bei einer Start-Stopp-Betriebsstrategie auch zeitweilig ausgeschaltet werden. Dadurch ist die Brennkraftmaschine von dem restlichen Antriebssystem abkuppelbar. Vorzugsweise ist der Generator unmittelbar an die Übertragungswelle angeschlossen. Der Gesamtwirkungsgrad des Generators wird hierdurch gesteigert, denn es werden die mechanischen und hydraulischen Verluste reduziert.

In einer weiteren Ausgestaltung kann der Generator auch unmittelbar an die Übertragungswelle angeschlossen, z. B. angeflanscht, werden. In diesem Fall ist der Generator selbst nicht abzutrennen. Es findet ein permanenter Leistungsfluss, z. B. für eine Erhaltungsladung des Energiespeichers, in den Generator statt.

Der Generator kann um eine Generatorwelle herum aufgebaut sein. Der Generator sitzt unmittelbar auf der Generatorwelle. Die Generatorwelle ist so an weiterführende Bauteile angebunden, dass die Generatorwelle von dem Übertragungsgetriebe durch eine Kupplungseinrichtung abkuppelbar ist. Vorteilhaft ist es, wenn die Kupplungseinrichtung eine Wechselkupplung ist. An der Wechselkupplung sind wenigstens zwei Wellen angebunden. Die Wechselkupplung schließt die eine von zwei abgangsseitigen Wellen an die Generatorwelle kraftschlüssig an. Entweder wird die eine oder die andere Welle zur Generatorwelle hin verbunden. Es werden in einer Ausgestaltung niemals beide Wellen auf die Generatorwelle aufgeschlossen. Es kann aber ein Betriebszustand gewählt werden, in dem beide Wellen von der Generatorwelle abgekuppelt sind. Wird eine Kupplung zwischen Generatorwelle und Übertragungsgetriebe angeordnet, so kann das Übertragungsgetriebe von der Generatorwelle abgekuppelt werden. Der Variator lässt sich tot stellen. Mit der Wechselkupplung lässt sich immer eine der beiden anzuschließenden abgangsseitigen Wellen abkuppeln. Das bedeutet, wenn der Generator an einer Welle angeschlossen ist, die in die Wechselkupplung hineinführt, lässt sich der Generator und alternativ die andere Welle stillsetzen oder abkuppeln. Entweder wird der Leistungsfluss über den Generator, also dem Variator, oder dem anderen Zweig durchgeführt.

Das Übertragungsgetriebe kann ein vier Getrieberäder umfassendes Getriebe sein. Mit den vier Getrieberädern lässt sich ein Getriebe derart aufbauen, dass wenigstens zwischen zwei Übersetzungsverhältnissen hin- und hergewechselt wird. Das Antriebssystem hat somit ein Übertragungsgetriebe, das ein wenigstens vier Getrieberäder umfassendes Übertragungsgetriebe ist. Mit einem solchen Getriebe kann zwischen wenigstens zwei Übersetzungsverhältnisse gewechselt werden.

Vorzugsweise das zweite und das vierte Getrieberad greifen an der gleichen Welle an, insbesondere an einer Hohlwelle. Die Hohlwelle ist wiederum an das Hohlrad angebunden. Räumlich kompakt lassen sich Antriebssysteme mit unterschiedlichen, schaltbaren Übersetzungsverhältnissen realisieren. Die Hohlwelle kann auf das Hohlrad führen. Die Hohlwelle ist an das Hohlrad angebunden. Eines der beiden Getrieberäder wirkt dann immer auf das Hohlrad.

Ein entsprechendes Verfahren zur hybridisierenden Kraftübertragung über ein zuvor näher erläutertes Antriebssystem arbeitet mit verschiedenen Antriebssträngen. Das Antriebssystem hat eine Brennkraftmaschine. Die Brennkraftmaschine ist die Hauptenergiequelle. Die Brennkraftmaschine kann auch als Primärenergiequelle bezeichnet werden. Die elektrische Energie des Antriebssystems entstammt ursprünglich dem kalorischen Prozess in der Brennkraftmaschine. Wird die Brennkraftmaschine ausreichend dimensioniert, so liefert die Brennkraftmaschine in mehr als 50 Prozent der Betriebszeit den hauptsächlichen Teil der Energie, also die Hauptenergie. In jedem Antriebsstrang lässt sich ein unterschiedliches Drehmoment erzeugen. In jedem Antriebsstrang lässt sich eine unterschiedliche Drehzahl der sich drehenden Teile erzeugen. Während des Betriebs lässt sich die Kupplung betätigen. Die Kupplung kann unterschiedliche Kupplungsstellungen einnehmen. Wenigstens eine Kupplungseinrichtung ist in dem Antriebssystem vorhanden, die unterschiedliche Kupplungsstellungen einnehmen kann. Weiterhin wird wenigstens ein Inverter angesteuert. Über die Ansteuerung des Inverters kann der elektrische Motor, der Elektromotor, in unterschiedliche Betriebspunkte gebracht werden. Die einzustellenden Motorbetriebspunkte des Elektromotors bestimmen eine gewünschte Drehzahl und ein gewünschtes Drehmoment an der Abtriebswelle. Die Abtriebswelle wird durch das Summierplanetengetriebe gedreht. Vorzugsweise durch eine elektronische Steuereinrichtung, es kann auch gesagt werden, mit Hilfe der elektronischen Steuereinrichtung, wird die Drehzahl der Abtriebswelle eingestellt.

Vorzugsweise durch eine Drehzahlveränderung eines Sonnenrades des Summierplanetengetriebes lässt sich eine sanfte Beschleunigung der Abtriebswelle erreichen. Vorteilhaft ist es, wenn unterdessen, also während der Beschleunigungsphase, (zeitgleich) die Brennkraftmaschine zunächst in einem gleich bleibenden, insbesondere niedrigtourigen, Drehzahlbereich gehalten wird.

Das Summierplanetengetriebe dient als Drehmomentenaddierer. Jede andere Vorrichtung, die ähnlich diese Aufgabe erfüllen kann, wird ebenfalls als Summierplanetengetriebe im Sinne der vorliegenden Erfindung betrachtet. Aus zwei Drehmomentenquellen wird die Abgabe einer Abtriebsleistung über die Abtriebswelle zusammengefügt. Eine Drehmomentenquelle liefert ein Drehmoment auf das Sonnenrad. Eine Drehmomentenquelle liefert ein Drehmoment auf ein Hohlrad des Summierplanetengetriebes. Die unterschiedlichen Drehmomente werden auf das Summierplanetengetriebe eingeleitet. Die Stege werden insbesondere unmittelbar genutzt. An den Stegen des Summierplanetengetriebes ist die Abtriebswelle angebunden. Das Summierplanetengetriebe kann additiv zwei Drehmomente, die voneinander unterschiedlich sind, verbinden.

Durch eine geeignete Kombination der zahlreichen, zuvor dargelegten Ausführungsvarianten lassen sich Getriebe und Antriebssysteme gestalten, die für unterschiedlichste Anwendungsfälle verwendet werden können, z. B. für Motorräder genauso wie für Lastenkräne und Auslegerarme. Versuchsweise sind erfindungsgemäße Antriebssysteme in Hebewerken von Arbeitsmaschinen eingebaut worden. Einige Getriebe zeichnen sich durch erhöhte Laufsicherheit und damit Betriebssicherheit aus, andere Getriebe zeichnen sich durch besondere Dynamik aus.

In der Zeichnung werden Ausführungsbeispiele der Erfindung gezeigt, die nachstehend näher beschrieben werden.

Es zeigen:
- Fig. 1: ein schematisch dargestelltes Antriebssystem in einer ersten, grundsätzlichen Variante,
- Fig. 2: ein schematisch dargestelltes Antriebssystem für ein Kraftfahrzeug, insbesondere in einer zweiten, etwas abgewandelten Variante zu der in Fig. 1 dargestellten Variante,
- Fig. 3: eine Ansicht entsprechend Fig. 1 mit einer weiteren Ausführungsform eines Kraftfahrzeugs,
- Fig. 4: eine Ansicht entsprechend Fig. 3 mit einer weiteren Ausführungsform eines Antriebssystems,
- Fig. 5: eine weitere Ausführungsform eins Antriebssystem, die sich durch ihre Einfachheit auszeichnet,
- Fig. 6: eine weitere Ausführungsform eines Antriebssystems, das in Teilen der Ausführungsform nach Fig. 5 ähnelt,
- Fig. 7: eine weitere Ausführungsform eines Antriebssystems, das in Teilen der Ausführungsform nach Fig. 6 ähnelt.

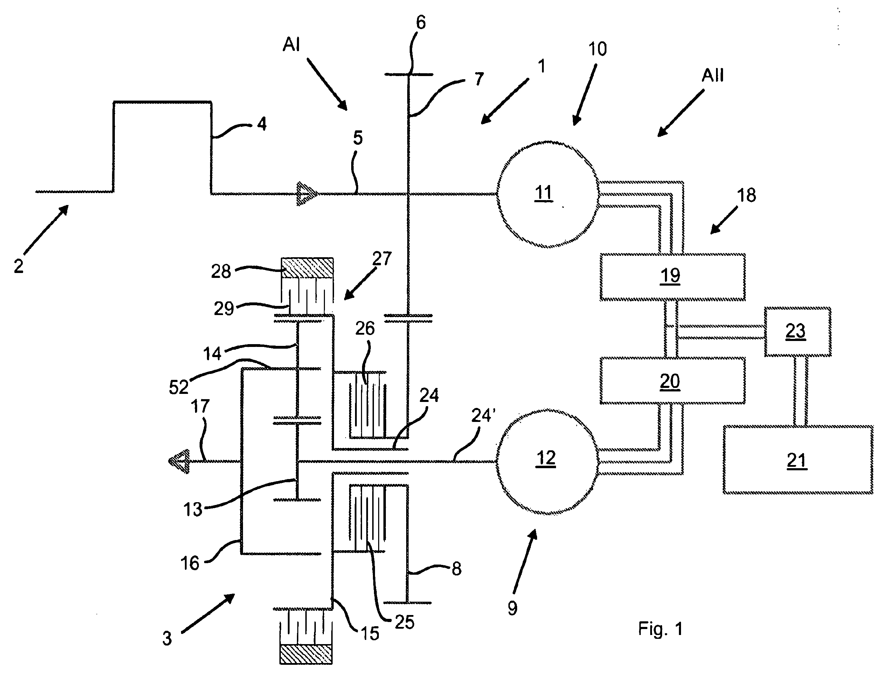

Nachfolgend werden ähnliche Bauteile, Gegenstände und Teile in den unterschiedlichen Ausführungsbeispielen der Figuren 1 bis 7 mit den gleichen oder mit um jeweils 100 erhöhten Bezugszeichen beschrieben, obwohl zwischen den einzelnen Teilen geringfügige Abweichungen ersichtlich sein können. Hierdurch wird leichter verständlich, inwiefern die gleichen Bauteile, Gegenstände und Teile unproblematisch variiert werden können und trotzdem der vorliegenden Erfindung zugehörig angesehen werden.

Figur 1 zeigt ein Antriebssystem 1, das in Kraftfahrzeugen sowohl für den Fahrantrieb als auch an anderen Stellen verbaut zur Bewegung von Auslegern und Kranaufbauten verwendet werden kann. Das Antriebssystem 1 hat wenigstens zwei Antriebsstränge Al und All. Die beiden Antriebsstränge Al und All sind parallel zueinander aufgebaut; durch eine gemeinsame Übertragungswelle 5 wird die Rotationsenergie der Kurbelwelle 4, die zum Beispiel aus einer Brennkraftmaschine 2 bezogen werden kann, sowohl in den ersten Antriebsstrang Al als auch in den zweiten Antriebsstrang All eingeleitet. Abtriebsseitig werden die beiden Antriebsstränge Al und All durch ein Getriebe mit summierender Wirkung wie ein Summierplanetengetriebe 3 wieder auf eine Abtriebswelle 17 zusammengeführt. In der einfachsten Gestaltung hat das Summierplanetengetriebe 3 ein Sonnenrad 13, mehrere Planetenräder, wie das Planetenrad 14, ein Hohlrad 15 und einen entsprechenden Planetenträger 16. Das Planetenrad 14 sitzt auf dem Steg 52. Das Drehmoment bzw. die Kraft wird über die Stege der Planetenräder 14 auf den Planetenträger 16 und somit auf die Abtriebswelle 17 geleitet. Der eine Antriebsstrang Al wird durch das Übertragungsgetriebe 6 gebildet. Der andere Antriebsstrang All wird durch ein andersartiges Getriebe 9 gebildet. Das Übertragungsgetriebe 6 und das Getriebe 9 sind Getriebe unterschiedlichen Typs. Das zweite Getriebe 9 ist ein stufenlos arbeitendes Getriebe, das durch einen Variator 10 gebildet werden kann. Der Variator 10 umfasst einen Generator 11 und ein Elektromotor 12. Die rotatorische Energie, die in den Generator 11 eingeleitet wird, wird in elektrische Energie für eine Invertereinrichtung 18 umgewandelt, um anschließend einen von dem Abtrieb benötigten Teil der elektrischen Energie über den Elektromotor 12 auf das Summierplanetengetriebe 3, genauer das Sonnenrad 13, einzuleiten. Die beiden Antriebsstränge Al und All werden über Wellen-24, 24 auf das Summierplanetengetriebe verbunden. Die Wellen 24, 24' laufen koaxial. Daher ist die Welle 24 eine die innenverlaufende Welle 24' einfassende Hohlwelle. Dem Variator 10 zugehörig werden der Generator 11, der Elektromotor 12, der Inverter 19, der Inverter 20, die zusammen eine Invertereinrichtung 18 bilden, eine Lade-/Entladekontrolleinrichtung 23 und ein elektrischer Speicher 21 gezählt. So, wie in Figur 1 dargestellt, können die Verbindungen von dem Generator 11 und zu dem Elektromotor 12 auf der elektrischen Seite dreiphasig ausgestaltet sein. Zwischen den beiden Invertern 19, 20 kann ein Spannungszwischenkreis mit nur einer einzigen Phase realisiert sein. Die mechanische Bewegungsenergie der Brennkraftmaschine 2, die über eine geeignete Abtriebswelle wie eine Kurbelwelle 4 ausgeleitet wird, wird zum Teil mechanisch über das Übertragungsgetriebe 6, das sich aus dem Getrieberad 7 und dem Getrieberad 8 zusammensetzt, übertragen und teilweise wird sie mechanisch-elektrisch umgewandelt, um in der Stärke angepasst zu werden. Durch eine Kupplungseinrichtung 25, die zum Beispiel als Anfahrkupplung 26 gestaltet sein kann, kann einer der beiden Antriebsstränge Al, All von dem Abtrieb der Abtriebswelle 17 abgekuppelt werden. Wie in Figur 1 dargestellt, lässt sich die Kupplungseinrichtung 25 zwischen dem zweiten Getrieberad 8 und dem Hohlrad 15 des Summierplanetengetriebes 3 zur mechanischen Trennung des Übertragungsgetriebes 6 von dem Summierplanetengetriebe 3 anordnen. Mit einfachen Mitteln kann weiterhin eine Festsetzeinrichtung 28, die zum Beispiel eine Reibungsbremse 29 sein kann, auf der Außenseite 27 des Hohlrads 15 angeordnet werden, sodass aus dem Summierplanetengetriebe 3 während der Festsetzphase durch die Festsetzeinrichtung 28 nur das Übersetzungsverhältnis zwischen Sonnenrad 13 und einem oder mehreren Planetenrädern 14 wirkt. In dem Fall des Festsetzens des Hohlrades 15 durch die Festsetzeinrichtung 28 bildet das Hohlrad 15 eine feststehende innen bezahnte Ablaufeinrichtung für die Planetenräder 14. Vorteilhafterweise lässt sich die elektrische Energiemenge, die durch die Lade-/Entladekontrolleinrichtung 23 zu und von dem Energiespeicher 21 geleitet wird, einstellen. Durch diese Maßnahme kann die über das stufenlose Getriebe 9 übertragbare mechanische Leistung variiert werden. Ein erfindungsgemäßes Antriebssystem 1 zeichnet sich unter anderem dadurch aus, dass die Brennkraftmaschine 2, die insgesamt kleiner dimensioniert werden kann als übliche Brennkraftmaschinen für die gleichen Arbeitsaufgaben, in einem optimalen Betriebsbereich gehalten wird, und Spitzenleistungen aus dem Variator 10 ggf. zusätzlich bezogen werden. Wird von der Antriebswelle 17 hinter dem Summierplanetengetriebe 3 nur eine geringere Leistung abverlangt, als von der Brennkraftmaschine 2 zur Verfügung gestellt wird, so kann die überschüssige Energie nach dem Generator 11, über den Inverter 19 zur Verfügung gestellt, in dem elektrischen Speicher 21 zwischengespeichert werden. So lassen sich über- und unterangepasste mechanische Energien der Brennkraftmaschine 2 günstig ausgleichen.

Das Antriebssystem 1 nach der Ausführungsform gem. Figur 1 lässt sich rein elektrisch betreiben. Insbesondere bei geringen Geschwindigkeiten, also bei geringen Drehzahlen der Abtriebswelle 17, kann die gesamte Antriebsleistung aus dem Elektromotor 12 bezogen werden. Der mechanische Antriebszweig Al lässt sich über die Kupplungseinrichtung 25 abkuppeln. Im abgekuppelten Zustand werden die Getrieberäder 7, 8 nur über die Welle 5 (leer laufend) mitgeschleppt. Ein Übergang des Antriebssystems 1 von einem reinen elektrischen Betrieb auf einen leistungsverzweigten Betrieb kann über eine Schleife der Kupplungseinrichtung 25 bzw. der Anfahrkupplung 26 erfolgen. Somit ist ein schleifendes Beschleunigen des Hohlrads 15 möglich. Vorteilhaft ist eine Getriebespreizung möglich. Der Elektromotor 12 lässt sich sowohl vorwärts als auch rückwärts betreiben. Dann pendelt das Sonnenrad 13 um einen theoretischen Nullpunkt. Das bedeutet, die Drehzahl der Abtriebswelle 17, die sich aus dem mechanischen Zweig Al ergibt, wird als theoretischer oder virtueller Nullpunkt betrachtet, um den herum die Drehzahl des Elektromotors 12 über das Sonnenrad 13 pendeln kann. Die Drehzahl des Hohlrads 15 wird über das Übersetzungsverhältnis der Getrieberäder 7 und 8 bestimmt. Über die Festsetzeinrichtung 28 kann das Hohlrad 15 gebremst oder stillgesetzt werden. Die Antriebsleistung aus dem Elektromotor 12 lässt sich gut überlagern. Das Antriebssystem 1 nach Figur 1 wird gerne verwendet, wenn eine Getriebespreizung erwünscht ist.

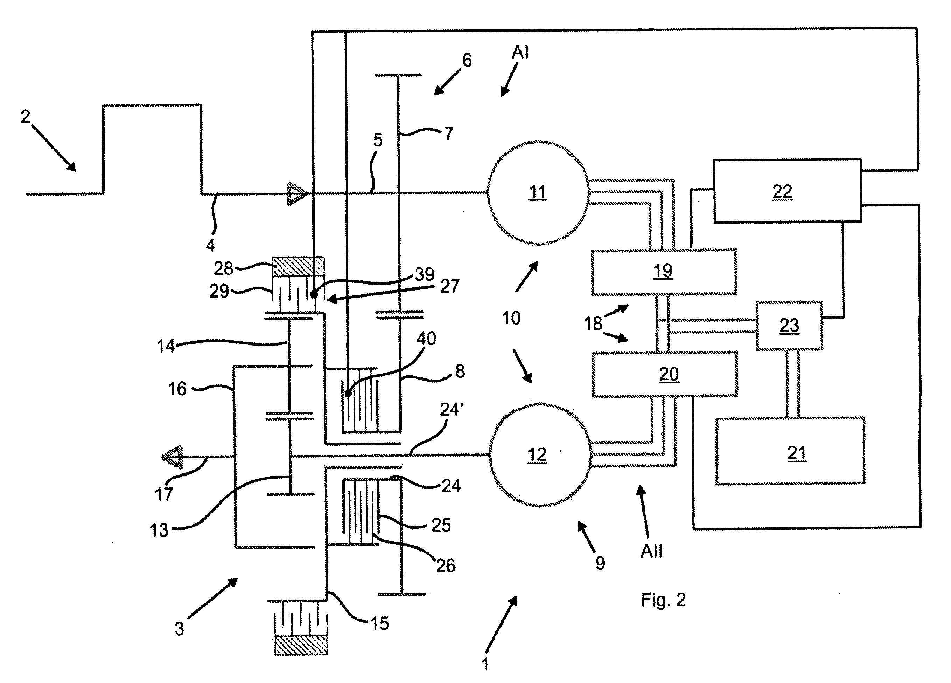

Im Folgenden wird die Figur 2 näher beschrieben, die ein Antriebssystem 1 aus Brennkraftmaschine 2, Variator 10, Getrieben 3, 6, 9 und geeigneten Kupplungen 25, 28 darstellt.

Von einem Kraftfahrzeug motorradähnlicher Gattung, wie z. B. Scooter, Maxiscooter, Trike, Quad, Schneemobil oder aber auch entsprechende Arbeitsmaschinen, ist lediglich ein Antriebssystem 1 dargestellt, das eine Brennkraftmaschine 2 und ein Summierplanetengetriebe 3 umfasst. Eine von der Brennkraftmaschine 2 bzw. einer Kurbelwelle 4 weggeführte Übertragungswelle 5 beeinflusst ein Übertragungsgetriebe 6, Bauart Stirnradgetriebe, mit wenigstens einem ersten Getrieberad 7 und einem zweiten Getrieberad 8; Kurbelwelle 4 und erstes Getrieberad 7 sind direkt oder unter Vermittlung eines Schwingungsdämpfers - nicht gezeigt - miteinander verbunden. Das Übertragungsgetriebe 6 steht in Wirkverbindung mit dem Summierplanetengetriebe 3 - erster Antriebsstrang Al - und einem stufenlosen Getriebe 9 - zweiter Antriebsstrang All -, das ebenfalls auf besagtes Summierplanetengetriebe 3 einwirkt.

Das stufenlose Getriebe 9 ist als ein elektrischer Variator 10 ausgeführt und mit einem Generator 11 und einem Elektromotor 12 versehen. Dabei sind der Generator 11 mit dem ersten Getrieberad 7 des Übertragungsgetriebes 6 und der Elektromotor 12 mit einem Sonnenrad 13 des Summierplanetengetriebes 3 gekoppelt. Das Sonnenrad 13 kämmt mit einem Planetenrad 14, das von einem Hohlrad 15 umgeben ist und mit letzterem in Eingriff steht. Über das Planetenrad 14 bzw. einen Planetenträger 16 des Summierplanetengetriebes 3 wird eine Abtriebswelle 17, die bspw. wenigstens ein Antriebsrad - nicht gezeichnet - des Kraftfahrzeugs antreibt.

Zwischen Generator 11 und Elektromotor 12 ist eine Invertereinrichtung 18 geschaltet, die einen ersten Inverter 19 und einen zweiten Inverter 20 umfasst. Die Inverter 19 und 20 sind an einen elektrischen Speicher 21 angeschlossen und arbeiten als Wechselrichter, d. h., die Gleichspannung des elektrischen Speichers 21 wird via der Inverter 19 und 20 in Wechselspannung umgewandelt. Zur Beeinflussung des Generators 11 und des Elektromotors 12 ist eine elektronische Steuereinrichtung 22 vorgesehen. Darüber hinaus ist zwischen elektrischem Speicher 21 und den Invertern 19 und 20 eine Lade-/ Entladekontrolleinrichtung 23 wirksam.

Eine Hohlwelle 24 umgibt eine Antriebswelle 24', die den Elektromotor 12 und das Sonnenrad 13 miteinander verbindet. Die Hohlwelle 24 ist mit dem Hohlrad 15 des Summierplanetengetriebes 3 verbunden, und sie arbeitet mit dem zweiten Getrieberad 8 des Übertragungsgetriebes 6 zusammen. Zwischen Hohlwelle 24 und Hohlrad 15 ist eine Kupplungseinrichtung 25 vorgesehen, die als Anfahrkupplung 26 - Reibungskupplung - ausgeführt ist.

Das Hohlrad 15 wirkt an seiner Außenseite 27 mit einer Festsetzeinrichtung 28 zusammen. Die Festsetzeinrichtung 28 ist im Ausführungsbeispiel eine Reibungsbremse 29; denkbar ist aber auch, sie als Sperrklinkeneinrichtung auszubilden. Die Kupplungseinrichtung 25 und die Festsetzeinrichtung 28 stehen in Wirkverbindung mit der elektronischen Steuereinrichtung 22.

Mit Sensoren 39, 40 können wesentliche Messwerte, wie die Schaltzustände, die Kraftübertragung und sonstige Betriebsparameter des Antriebssystems 1, gemessen werden und die Messwerte können an die elektronische Steuereinrichtung 22 übertragen werden. Die Steuereinrichtung 22 verarbeitet die Messwerte der Sensoren 39, 40 und stellt in Folge der Verarbeitung die Invertereinrichtung 18, zumindest aber einen der Inverter 19, 20 für die zusätzliche elektrische Energie, die aus dem Variator 10 bezogen werden soll, ein. Liegt ein Energieüberschuss vor, so kann über die Einstellung des Variators 10 durch die auf die Invertereinrichtung 18 wirkende Steuereinrichtung 22 die überschüssige Energie, die aus der Brennkraftmaschine 2 bezogen wird, in den elektrischen Speicher 21, der im Sinne eines Zwischenspeichers verwendet wird, geladen werden. Einer der Inverter 19, 20 arbeitet als Gleichrichter, während der andere Inverter 20, 19 als Zerhacker arbeitet.

Ist die Lade/Entladekontrolleinrichtung 23 mit einer eigenständigen Logik, z. B. in der Form eines Mikrokontrollers ausgestattet, so kann die Logik der elektronischen Steuereinrichtung 22 auch vollständig in der Lade-/Entladekontrolleinrichtung 23 integriert sein; die beiden Bauteile Steuereinrichtung 22 und Lade-/Entladekontrolleinrichtung 23 sind zu einer neuartigen Lade-/Entladekontrolleinrichtung mit eigenständiger Verarbeitungslogik im Sinne eines Steuergerätes zusammengefasst (vgl. Figuren 1 und 2).

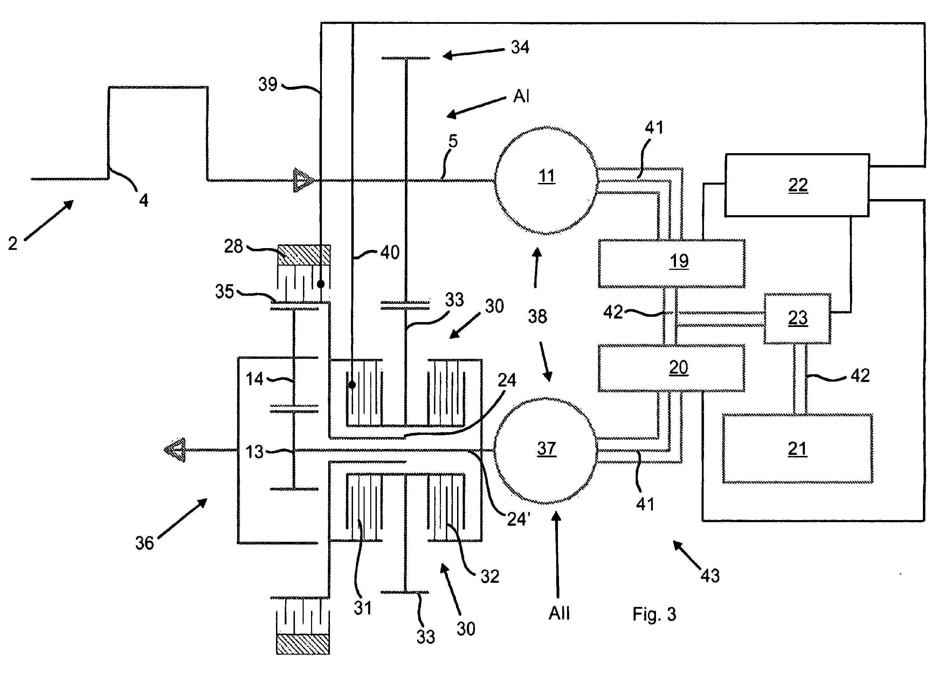

Gemäß Fig. 3 umfasst eine Kupplungseinrichtung 30 eine Anfahrkupplung 31 und eine Überbrückungskupplung 32. Die Anfahrkupplung 31 ist zwischen einem zweiten Getrieberad 33 eines Übertragungsgetriebes 34 und einem Hohlrad 35 eines Summierplanetengetriebes 36 wirksam. Schließlich ist die Überbrückungskupplung 32 zwischen einem Elektromotor 37 und dem zweiten Getrieberad 33 angeordnet. Dank -der Überbrückungskupplung 32 besteht die Möglichkeit, dass der gesamte Antriebsstrang All - elektrischer Variator 38 - deaktiviert wird, derart, dass die Antriebsleistung rein mechanisch - Antriebsstrang Al - übertragen wird. Hierdurch können die in einem elektrischen Variator 38 auftretenden Verluste minimiert werden, und das Kraftfahrzeug kann auch beim Ausfall von Komponenten des elektrischen Variators 38 - Antriebstrang All - grundsätzlich betrieben werden.

Das in Figur 3 dargestellte Antriebssystem 43 ist wesentlich um zwei getrennte Antriebswellen 5 und 24, 24' aufgebaut. Die Übertragungswelle 5 leitet das Drehmoment aus der Brennkraftmaschine 2, das an der Kurbelwelle 4 abgegriffen werden kann, in das doppelt ausgeführte Getriebe 34, 38. Die doppelt ausgeführte Welle 24, 24' leitet die Energie über ein summierendes Getriebe, wie das Summierplanetengetriebe 36 abtriebsseitig aus. Das Summierplanetengetriebe 36 setzt sich aus einem Hohlrad 35, das über eine Festsetzeinrichtung 28 auch örtlich festgesetzt werden kann, wenigstens einem Planentenrad 14 und einem Sonnenrad 13 zusammen. Auf das Hohlrad 35 kann die Kupplungseinrichtung 30 so einwirken, dass das Drehmoment aus einem der beiden Antriebsstränge Al und All abgekoppelt werden kann. Alternativ kann die Überbrückungskupplung 32 dazu genutzt werden, den Kraftfluss aus dem Variator 38 überbrückend in das Summierplanetengetriebe 36 einzuleiten. Der Variator 38, der den Elektromotor 37 und den Generator 11 umfasst, ist ein elektrischer Variator 38. Somit werden über Kabel 41, 42 der Generator 11, der Inverter 19, der Inverter 20, die Lade-/Entladekontrolleinrichtung 23 und der elektrische Speicher 21 miteinander verbunden. Zwischen Generator 11 und dem dazu gehörigen Inverter 19 bzw. dem Elektromotor 37 und dem dazugehörigen Inverter 20 ist jeweils ein Kabel 41 für eine dreiphasige Anbindung vorgesehen. Zwischen den einzelnen Invertern 19, 20 und stichleitungsartig dazu zu der Lade-/Entladekontrolleinrichtung 23 ist eine zweiadrige Leitung 42 vorgesehen. Zustandsmessungen des Antriebssystems 43 werden über Sensoren 39, 40 auf der elektronischen Steuereinrichtung 22 ausgeführt, damit die Steuereinrichtung 22 wenigstens einen Inverter 19 und die Lade-/Entladekontrolleinrichtung 23 zustandsabhängig steuern und regeln kann.

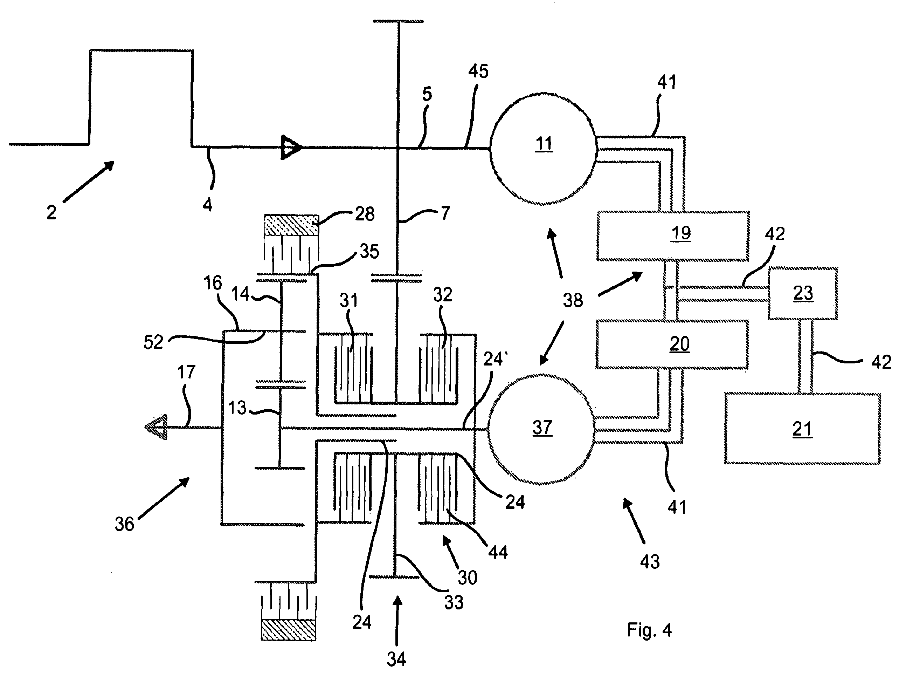

Figur 4 zeigt eine weitere Ausführungsform, die ähnlich der Ausführungsform nach Figur 3 ist. Figur 4 unterscheidet sich von der Ausführungsform nach Figur 3 in der elektronischen und elektrischen Gestaltung des elektrischen Getriebeteils des Antriebssystems 43. Eine Energiequelle für die rotatorische Energie im Antriebssystem 43 ist die Brennkraftmaschine 2. Die Brennkraftmaschine 2 kann jede übliche Brennkraftmaschine sein, wie zum Beispiel ein Diesel- oder Benzinverbrennungsmotor. Die Kurbelwelle 4 der Brennkraftmaschine 2 ist an einer Übertragungswelle 5 befestigt. Die Übertragungswelle 5 kann eine Welle 45 des Generators 11 sein. Die Übertragungswelle 5 und die Generatorwelle 45 sind identisch. Die Übertragungswelle 5 trägt neben dem Generator 11 auch noch ein erstes Getrieberad 7 eines Übertragungsgetriebes 34. Das Übertragungsgetriebe 34 setzt sich aus wenigstens zwei Getrieberädern 7, 33 zusammen. Über das Übertragungsgetriebe 34 kann eine Drehzahl-/ Drehmomentenübersetzung erfolgen. Der Generator 11 ist elektrisch über ein entsprechendes Kabel 41 an einen Inverter 19 angeschlossen. Der Inverter 19 wandelt die Spannung des Generators 11 in eine andere elektrische Spannung um, z. B. aus einer dreiphasigen Wechselspannung wird eine Gleichspannung. Die elektrische Spannung zwischen dem Inverter 19 und dem Inverter 20, die beide durch ein Kabel 42 verbunden sind, kann über eine Lade-/Entladekontrolleinrichtung 23 an einen elektrischen Speicher 21 zum Laden bzw. Entladen des elektrischen Speichers 21 benutzt werden. Durch eine Spannungssteuerung, z. B. in der Lade-/Entladekontrolleinrichtung lässt sich der Stromfluss zu und von dem Energiespeicher 21 einstellen. Der elektrische Speicher 21 kann jede handelsübliche Batterie sein, sofern es sich um einen Sekundärakkumulator, wie einem Bleiakkumulator oder einen Lithium-lonen-Akkumulator, handelt. Zu dem elektrischen Variator 38 gehört neben dem Elektromotor 37 auch der Generator 11. Die mechanische Energie der Übertragungswelle 5 wird über den Generator 11 in eine elektrische Energie umgewandelt, um später oder anschließend über den Elektromotor 37 wieder zur Verfügung gestellt zu werden. Je nachdem, welche elektrische Energie zusätzlich zu der mechanischen Energie der Kurbelwelle 4 der Brennkraftmaschine 2, die über das Übertragungsgetriebe 34 zum Summierplanetengetriebe 36 zur Verfügung gestellt wird, benötigt wird, lässt sich eine Kupplungseinrichtung 30 so schalten, dass nur ein Drehmoment aus dem Übertragungsgetriebe 34 an das Summierplanetengetriebe 36 gelangt (erster Schaltzustand), zusätzlich ein Drehmoment von dem Elektromotor 37 an das Summierplanetengetriebe 36 gelangt (zweiter Schaltzustand) oder ausschließlich das gesamte Drehmoment von dem Elektromotor 37 über die Antriebswelle 24' an das Summierplanetengetriebe 36 gelangt (dritter Schaltzustand). Die Kupplungseinrichtung 30 ist mit Lamellenkupplungen 44 realisiert. Das Summierplanetengetriebe 36 hat aus diesem Grund ein Sonnenrad 13, das an einer ersten Antriebswelle 24' angebunden ist, und ein Hohlrad 35, das an einer zweiten Welle 24 angebunden ist. Zur höheren Stabilität der Antriebswelle 24, 24' ist die Antriebswelle 24, 24' eine mehrfach übereinander geschobene Welle, deren äußeren Teile 24 als Hohlwellen die inneren Teile der Welle 24' einfassen. Die Kupplungseinrichtung 30 besteht aus mehreren einzelnen Kupplungen 31, 32. Die einzelnen Kupplungen 31, 32 nehmen unterschiedliche Aufgaben wahr. Eine Kupplung ist eine Anfahrkupplung 31. Eine Kupplung ist eine Überbrückungskupplung 32. Zwischen Überbrückungskupplung 32 und Anfahrkupplung 31 ist eines der Getrieberäder 7, 33 des Übersetzungsgetriebes 34 auf der Welle 24 aufgeschrumpft. Die Wellen 24, 24' münden in einzelne Bauteile 13, 35 des Summierplanetengetriebes 36. Das Summierplanetengetriebe 36 hat neben dem Sonnenrad 13 ein Planetenrad 14. Das Abtriebsdrehmoment, das an der Abtriebswelle 17 abgegriffen werden kann, wird über die Planetenträger 16, an denen die Planetenräder 14 sitzen, abtriebsseitig zur Verfügung gestellt. Genauer gesagt, die Planetenräder 14 sitzen auf Stegen 52. Eine der Hohlwellen 24 mündet in einer Festsetzeinrichtung 28. Die Festsetzeinrichtung 28 kann an dem Hohlrad 35 angreifen. Somit lässt sich die Hohlwelle 24 zusammen mit dem Hohlrad 35 über die Festsetzeinrichtung 28 feststellen. In dem Fall kann eine Drehbewegung nur über die innere Welle 24' der Antriebswelle 24' in das Sonnenrad 13 eingeleitet werden. Das Hohlrad 35 ist eine feststehende äußere Begrenzung für die Planetenräder 14, die in der Innenverzahnung des Hohlrads 35 ablaufen können. Anstelle des Summierplanetengetriebes 36 kann auch jede andere Art von Getriebe eingesetzt werden, das im Ergebnis die Wirkung entfalten kann, dass ein Drehmoment aus einem ersten Antriebsstrang, zum Beispiel über ein Übertragungsgetriebe 34, und ein Drehmoment aus einem zweiten Antriebsstrang, zum Beispiel aus dem Elektromotor 37, zusammengeführt und additiv ausgeleitet werden kann. Das Antriebssystem 43 ist um zwei Wellen 5, 24, 24' herum aufgebaut. Die eine Hälfte des Antriebssystems 43 ist ein mechanisches Antriebssystem, während die zweite Hälfte des Antriebssystems 43 ein elektrisches Antriebssystem ist. Diese Hybridgestaltung des Antriebssystems 43 erlaubt es, Drehbewegungen an der Abtriebswelle 17 von nahezu 0 bis in einen maximalen Bereich, der über das maximale Drehmoment der Brennkraftmaschine 2 reicht, zur Verfügung zu stellen. Der Variator 38 ist ein elektrischer Variator. Der Variator 38 wird im Ergebnis als stufenloses Getriebe betrieben. In einer weiteren vereinfachten Form - nicht dargestellt - kann die Lade-/Entladekontrolleinrichtung 23 zusammen mit dem elektrischen Speicher 21 weggelassen werden. Anstelle eines elektrischen Speichers 21 können auch Kapazitäten und sonstige geeignete Speicherbausteine, die elektrische Energie speichern können, direkt zwischen den beiden Invertern 19, 20 angeordnet werden. Soll das Antriebssystem nicht festsetzbar sein, so kann die Festsetzeinrichtung 28 ebenfalls entfallen. Durch die Festsetzeinrichtung 28 wird das Hohlrad 35 an seiner Drehung gehindert. Der Elektromotor 37 arbeitet zusammen mit dem Generator 11. Das Hybridsystem des Antriebssystems 43 setzt sich aus zwei Motoren 2, 37 und entsprechenden Bauteilen zur Bestimmung der Übertragung 30, 31, 32, 28, 11, 19, 20 bzw. des Wirkungsgrades zusammen. In einer dritten Stufe werden die unterschiedlichen Drehmomente dann auf eine Abtriebswelle 17, zum Beispiel über ein Summierplanetengetriebe 36, zusammengeführt. Nach der Brennkraftmaschine 2 folgt eine erste Übertragungswelle 5. Auf der Übertragungswelle 5 sitzt das erste Getrieberad 7. Das erste Getrieberad 7 greift in das zweite Getrieberad 33 ein. Das zweite Getrieberad 33 sitzt auf einer Welle 24, 24'. Günstig ist es, wenn das Getrieberad 33 auf dem Hohlwellenteil 24 der Welle 24, 24' sitzt. Die Hohlwelle 24 mündet in zwei Kupplungen 31, 32, die zusammen eine Kupplungseinrichtung 30 bilden. Eine der Kupplungen 31, 32 führt in das Hohlrad 35. Die Welle 24' kann Teil des Elektromotors 37 sein. In der einfachsten Gestaltung sind der Generator 11 und der Elektromotor 37 unmittelbar elektrisch, zum Beispiel über Kabel 41, 42, miteinander verbunden. Werden entsprechende Inverter 19, 20 zwischen Generator 11 und Elektromotor 37 dazwischengeschaltet, so lässt sich die Drehzahl des Elektromotors 37 unabhängig von der abgegebenen Leistung des Generators 11 einstellen.

In der Konstellation eines Antriebssystems 43 nach Figur 4 kann eine Betriebsweise eingestellt werden, bei der der Variator 38 vollständig ausgeschaltet wird. In dem Fall, dass der Variator 38 nicht mehr betrieben wird, wird nur noch der Generator 11 über die Welle 5 mitgeschleppt. Hierdurch werden die elektrischen Verluste reduziert. Es werden nur Verluste für das Mitschleppen der Generatorwelle 45 in Kauf genommen. Wird bei ausgeschaltetem Variator 38 die Kupplung 31 geöffnet, die Kupplung 32 geschlossen und das Hohlrad 35 über die Hohlradbremse 28 stillgesetzt, so kann eine vorteilhafte sehr hohe Übersetzung zwischen Brennkraftmaschine 2 und Abtriebswelle 17 realisiert werden. In einer weiteren Konfiguration bzw. Betriebsweise kann auch eine besonders hohe Zugkraft für bestimmte Betriebspunkte der Brennkraftmaschine 2 erzeugt werden. Die Zugkraft ist anhebbar, wenn der Elektromotor 37 aufgeschaltet wird. Wird die Brennkraftmaschine 2 in einem Betriebspunkt gehalten, in der sie eine hohe Zugkraft anbietet, so kann die Zugkraft noch durch die Aufschaltung des Elektromotors 37 erhöht werden.

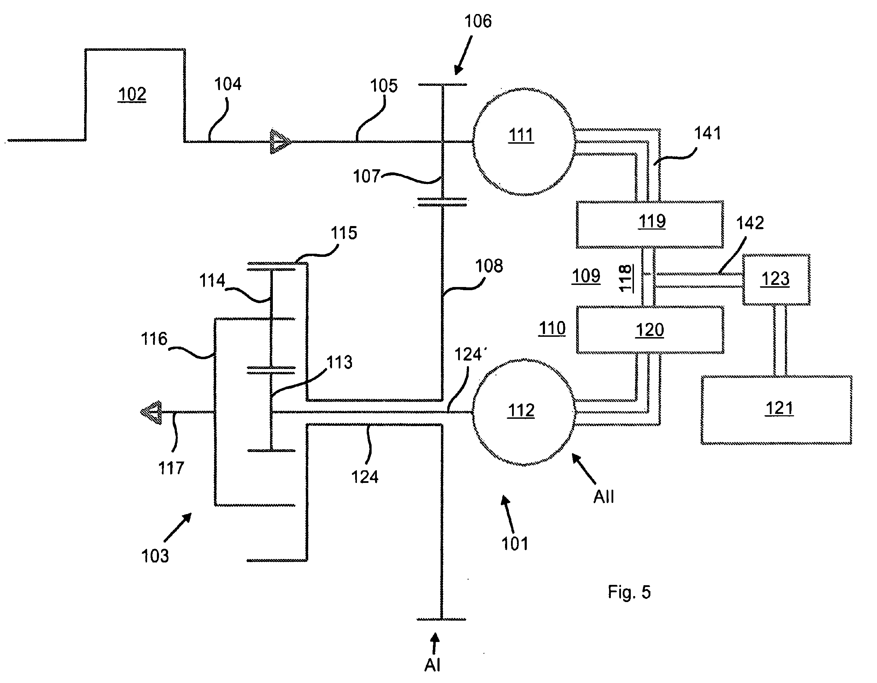

Figur 5 zeigt ein weiteres Antriebssystem 101. Das Antriebssystem 101 ist kupplungsfrei, es ist auch bremsvorrichtungsfrei. Das Antriebssystem 101 kann im Wesentlichen an zwei Stellen bezüglich des abzugebenden Drehmoments über die Abtriebswelle 117 eingestellt werden. Das Antriebssystem 101 kann durch eine Vergaserverstellung oder Einspritzverstellung an der bzw. Zündzeitpunktverstellung der Brennkraftmaschine 102 verändert werden. Durch einen anderen Betrieb der Brennkraftmaschine 102 ergibt sich ein jeweils angepasstes Drehmoment an der Kurbelwelle 104. Die Kurbelwelle 104 ist an die Übertragungswelle 105 angeflanscht. Als zweite leicht zu beeinflussende Stellgröße kann einer der Inverter 119, 120 des Variators 110 so verändert werden, dass der Elektromotor 112 ein angepasstes Drehmoment abgibt. Der eine Antriebsstrang Al ist ein mechanischer Antriebsstrang, der aus dem Übertragungsgetriebe 106 gebildet wird. Das Übertragungsgetriebe 106 hat ein erstes Getrieberad 107 und ein zweites Getrieberad 108. Das erste Getrieberad 107 ist kleiner als das zweite Getrieberad 108. Es findet somit eine Übersetzung in das Langsame durch das Übertragungsgetriebe 106 statt. Das zweite Getriebe 109 wird durch den Variator 110 gebildet. Zu dem Variator 110 gehören der Generator 111, der Elektromotor 112 und die Inverter 119, 120. Zusätzlich zu dem Getriebe 109 gehört ein elektrischer Speicher 121. Der Stromfluss zu dem elektrischen Speicher 121 wird durch eine Lade-/Entladekontrolleinrichtung 123 beeinflusst bzw. gesteuert. Die beiden Wellen 124, 124' sind gleich orientiert. Die beiden Wellen 124, 124' verlaufen abschnittsweise koaxial. Über die Hohlwelle 124 kann das mittels des zweiten Getrieberads 108 eingeleitete Drehmoment auf das Hohlrad 115 weitergeführt werden. Über die innere Welle 1-24' kann das Drehmoment auf das Sonnenrad 113 des Summierplanetengetriebes 103 weitergeleitet werden. Die beiden Drehmomente, die über das Hohlrad 115 und über das Sonnenrad 113 in das Summierplanetengetriebe 103 eingeleitet sind, werden über die Planetenräder 114 und anschließend den Planetenträger 116 zur Abtriebswelle 117 weitergeleitet. Der Generator 111, der erster Inverter 119, der zweite Inverter 120, der Elektromotor 112, die Lade-/ Entladekontrolleinrichtung 123 und der elektrische Speicher 121 sind über entsprechend angepasste Kabel 141, 142 elektrisch miteinander verbunden, sodass die Bauteile 111, 112, 119, 120, 121, 123 zusammen die Baugruppe Variator 110 als stufenloses Getriebe 109 bilden können. Die beiden Pfeile deuten, so wie auch in den übrigen Figuren, in Figur 5 die Kraftflussrichtung des Antriebssystems 101 an. Durch die Kupplungsfreiheit des Antriebssystems 101 gibt es weniger Verschleißteile. Durch den Wegfall von entsprechenden Kupplungen ist die Steuerungsaufgabe für ein Antriebssystem 101 nach Figur 5 soweit vereinfacht, dass die gesamte Logik in der Lade-/Entladekontrolleinrichtung 123 und der Motorsteuerung der Brennkraftmaschine 102 anordnenbar ist. Es kann ebenfalls eine eigenständige Steuereinrichtung entfallen. Die Invertereinrichtung 118 umfasst wenigstens zwei Inverter 119, 120. Zur besseren Funktionsweise der Invertereinrichtung 118 ist parallel zu den beiden Invertern 119, 120, sozusagen in Sternschaltung, die Lade-/ Entladekontrolleinrichtung 123 mit ihrem dazugehörigen elektrischen Speicher 121 angeschlossen. Sonnenrad 113, Planetenrad 114 und Hohlrad 115 verlaufen in der gleichen Flucht und somit parallel zu dem Übertragungsgetriebe 106. Demgegenüber ist die Anordnung der einzelnen Bauteile des Variators 110 beliebig. Die diversen Wellen 105, 124, 124' können einteilig mit der entsprechenden Welle des Generators bzw. des Elektromotors 112 ausgeführt sein. In dem Fall sind die beiden Wellen 105 und 124, 124' parallel verlaufend zueinander angeordnet. Die Abtriebswelle 117 kann als Fortsatz der Antriebswelle 124, 124' angeordnet werden. Nicht dargestellt, können weitere Kabel, zum Beispiel zwischen der Brennkraftmaschine 102 und dem Variator 110, angeordnet werden, als die nur zwischen Elektromotor 112 und Generator 111 im zweiten Antriebsstrang All dargestellten Kabel 141, 142. Trotz der wenigen drehenden Bauteile 104, 105, 106, 109, 103 lassen sich beliebige Drehmomente und Drehzahlen des Antriebssystems 101 einstellen.

Figur 5 zeigt ein Antriebssystem 101, das mit besonders wenigen Teilen auskommt. Das bedeutet, das Antriebssystem 101 hat eine geringe Ausfallwahrscheinlichkeit bezüglich seiner Teile. Auf der anderen Seite ist die Betriebssicherheit durch die fehlenden Redundanzen wieder etwas abgesenkt. Diese Tatsache, die übrigens auch eine Kostenersparnis bei dem Aufbau des Antriebssystems 101 mit sich bringt, lässt sich in einem gewissen Rahmen durch-einen höheren, insbesondere softwaremäßig durchgeführten, Steuerungsaufwand kompensieren. Ein Stillstand der Abtriebswelle 17 wird durch eine Drehzahlgleichheit des Sonnenrades 113 und des Hohlrads 115 erzeugt. Der Planetenträger 116 wird durch die gegenläufigen Abtriebe des Sonnenrades 113 und des Hohlrades 115 auf einen Nullumlauf gesetzt. Bei dauerbetriebenen Brennkraftmaschinen 102 entfaltet ein Antriebssystem 101 nach Figur 5 seine Vorteile.

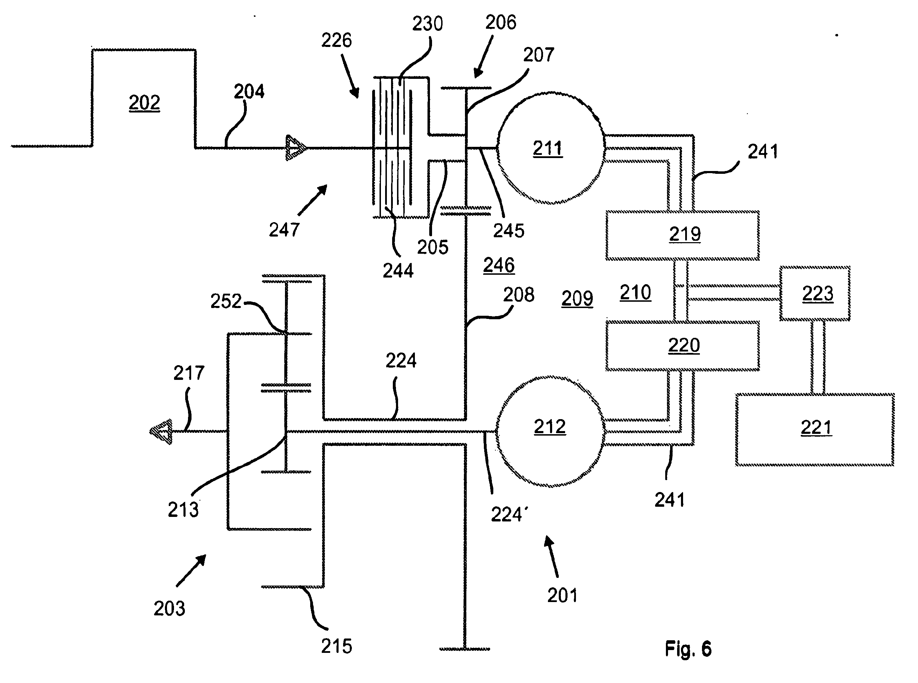

Figur 6 zeigt ein weiteres Ausführungsbeispiel eines Antriebssystems 201. Das Antriebssystem 201 ist in Teilen ähnlich zu dem Antriebssystem 101 nach Figur 5. Es ist ebenfalls eine Brennkraftmaschine 202 vorgesehen, deren Kurbelwelle 204 geeignet befestigt das Drehmoment der Brennkraftmaschine 202 auf eine Übertragungswelle 205 übertragen kann. Die Übertragungswelle 205 lässt sich über eine Kupplungseinrichtung 230 von der Kurbelwelle 204 abkuppeln. Hierzu hat die Kupplungseinrichtung 230 eine Lamellenkupplung 244. Die Lamellenkupplung 244 wird im Sinne einer Trennkupplung 247 verwendet. Um die Belastungen vor allem in Anfahrsituationen für die Brennkraftmaschine 202 zu reduzieren, lässt sich die Kupplungseinrichtung 230 als Anfahrkupplung 226 zum Abkuppeln der Brennkraftmaschine 202 von dem übrigen Antriebsystem, das aus dem elektrischen Antriebssystem 246 mit den entsprechenden Übersetzungsgetrieben 206, 203 besteht, trennen. Der Variator 210 ist elektrisch über einen Generator 211 und einen Elektromotor 212 realisiert. Das größere Drehmoment kann aus dem Elektromotor 212 als Drehmomentenquelle bezogen werden, wenn der Elektromotor 212 mit den herstellbaren Drehmomenten, vor allem im niedertourigen Bereich, mit der Brennkraftmaschine 202 und deren Drehmomenten verglichen wird. Weil das größere Drehmoment aus dem Elektromotor 212 an das Summierplanetengetriebe 203 übertragen wird, ist die Antriebswelle 224' als innenlaufende Massivwelle ausgelegt. Die zweite Antriebswelle 224 als Hohlwelle fasst die erste, massive Antriebswelle 224' ein. Es ist vorteilhaft, wenn die Massivwelle 224' auf das Sonnenrad 223 des Summierplanetengetriebes 203 geführt ist. Das zweite Drehmoment wird über die Hohlwelle 224 auf das Hohlrad 215 des Summierplanetengetriebes 203 übertragen. Die Stege 252 sind auf die Abtriebswelle 217 geführt. Das erste Getrieberad 207 ist von der einen Seite durch die Übertragungswelle 205 eingespannt, und von der anderen Seite durch die Generatorwelle 245. Über die Kupplungseinrichtung 230 kann somit die Generatorwelle 245 von der-Brennkraftmaschine 202 abgekuppelt werden. Das Übertragungsgetriebe 206 mit seinen beiden Getrieberädern 207, 208 übersetzt in das Schnelle. Die Größen der Getrieberäder 207, 208 sind in einem relativen Verhältnis angegeben (so wie in den übrigen Darstellungen auch). Der Variator 210 bestimmt den aufschaltbaren zusätzlichen Anteil des Drehmoments, das an der Abtriebswelle 217 von dem Antriebssystem 201 zur Verfügung gestellt wird. Für die Einstellbarkeit des Variators 210 hat der Variator 210 mehrere Inverter 219, 220. Fehlende Energie wird aus einem geeigneten Energiespeicher, wie einem elektrischen Speicher 221, durch Leistungshalbleiter, die in einer Lade-/ Entladekontrolleinrichtung 223 verbaut sein können, an einen der Inverter 219, 220 weitergeleitet. Die elektrischen Baugruppen 211, 212, 219, 220, 223, 221 sind über entsprechende Adern, zum Beispiel von Kabeln 241, elektrisch miteinander verbunden. Der Variator 210 wird als stufenloses Getriebe 209 benutzt. Der Variator 210 bildet wesentlich den einen Teil 246 des Antriebssystems 201 aus. Der Teil 246 wird aus dem elektrischen Antriebssystem und den Übersetzungsgetrieben 206 gebildet. Wird die Brennkraftmaschine 202 nicht benötigt, so lässt sich über die Kupplungseinrichtung 230 die Brennkraftmaschine 202 von dem übrigen Antriebssystem 246 abkuppeln und ggf. sogar stillsetzen. Bei einem Start-Stopp-Betrieb lässt sich so der Variator 210 als primäre Drehmomentenquelle verwenden. Ist der elektrische Speicher 221 zu weit entladen, so wird die Brennkraftmaschine 202 wieder über die Kupplungseinrichtung 230 an das restliche Antriebssystem 246 angekuppelt und ist nicht mehr gezwungen, im Leerlaufbereich oder knapp oberhalb des Leerlaufs ständig mitgeführt zu werden.

Soll ein Haltemoment auf dem Hohlrad 215 des Summierplanetengetriebes 203 aufgebracht werden, so kann in einer Gestaltung eines Antriebssystems 201 nach Figur 6 der Generator 211 bei über die Trennkupplung 247 abgekuppelter Brennkraftmaschine 202 motorisch betrieben werden. Alternativ kann der Generator 211 auch als Bremse für den mechanischen Antriebszweig verwendet werden. Die Konfiguration ist vorteilhaft bei einem Antriebssystem 201, das vorrangig mit einer Start-Stopp-Strategie betrieben wird.

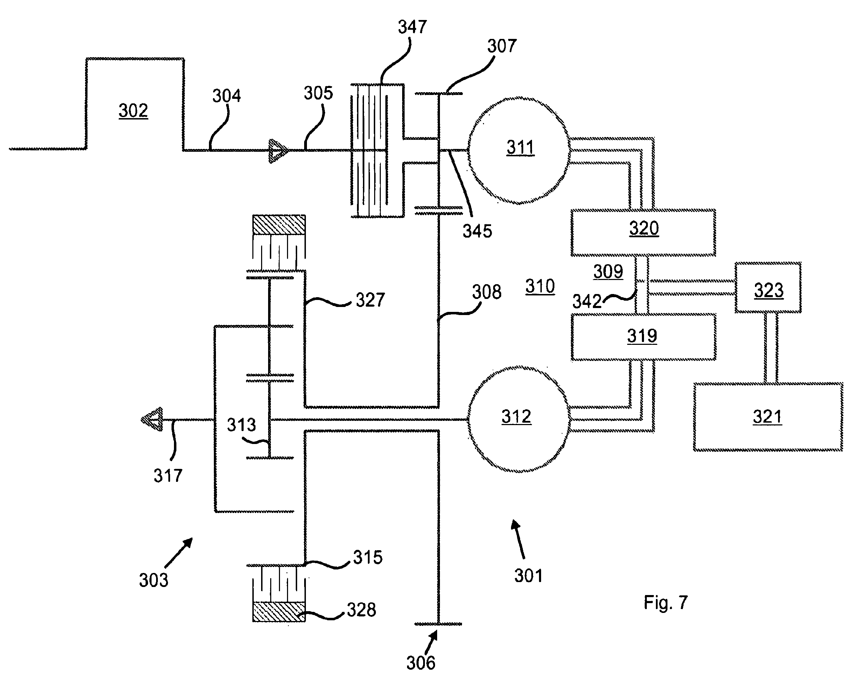

Figur 7 zeigt eine weitere Ausführungsform eines Antriebssystems 301. Das Antriebssystem 301 hat eine Trennkupplung 347. Die Trennkupplung 347 kann die Quelle der kalorischen Antriebsenergie, nämlich die Brennkraftmaschine 302, vom restlichen Antriebsstrang trennen. Die Antriebsenergie wird im Übrigen über die Übertragungswelle 305 in das restliche Antriebssystem eingeleitet. Daher ist die Kurbelwelle 304 bis auf die eine Seite der Trennkupplung 347 geführt. Die einzelnen Bauteile sind alle voneinander abgesetzt dargestellt, jedoch kann für eine kompaktere Gestaltung ein Bauteil mehrere Funktionen gleichzeitig übernehmen. Beispielhaft ist das zweite Getrieberad 308 abgesetzt von dem Hohlrad 315 des Summierplanetengetriebes 303 dargestellt. Auf der Außenseite 327 des Hohlrades 315 ist eine Festsetzeinrichtung 328 eingezeichnet. Bei einer konstruktiven Umsetzung der schematischen Darstellung wird, wenn eine besonders kompakte Ausführungsform bevorzugt wird, ein Getrieberad 308 mit äußerer Verzahnung als Zahnkranz mit einer inneren Verzahnung für die Zurverfügungstellung einer Ablauffläche in der Form eines Hohlrads 315 realisiert. Seitlich oder - in alternativer Ausgestaltung - zum Eingriff in die Lauffläche des inneren oder äußeren Zahnrads des Getrieberads 308 ist eine Festsetzeinrichtung 328 an dem Getrieberad 308 vorgesehen. Der Elektromotor 312 steht in Verbindung mit dem innen gelagerten Sonnenrad 313. Somit kann das zweite Getrieberad 308 unmittelbar auf der Abtriebswelle des Elektromotors 312 gelagert sein. Die scheibenartige Gestaltung des Getrieberads 308 bietet eine kreisrunde Aussparung für das Umlaufrädergetriebe des Summiergetriebes 303. In axialer Verlängerung zu der Motorwelle des Elektromotors 312 ist eine Abtriebswelle 317 angeordnet. Auf der Generatorwelle 345 kann das weitere Getrieberad 307, das erste Getrieberad, gelagert sein. Die Trennkupplung 347 ist abtriebsseitig wenigstens mit dem Getrieberad 307 verbunden, idealerweise einstückig ausgestaltet. Zur Bildung eines stufenlosen Getriebes sind der Generator 311, der Elektromotor 312, wenigstens zwei Inverter 319, 320 und weitere Bauteile, wie eine Lade-/ Entladekontrolleinrichtung 323 und ein elektrischer Speicher 321, über Kabel 342 miteinander elektrisch verbunden. Hierbei ist der elektrische Generator 311 mit dem zweiten Inverter 320 verbunden. Der Elektromotor 312 ist mit dem ersten Inverter 319 verbunden. Die Inverter können Teil der Regel- und Steuerungselektronik des Generators 311 bzw. des Elektromotors 312 sein. Der Generator 311 und der Elektromotor 312 können in dem gleichen Gehäuse mit seitlich angeflanschten Invertern 319, 320 realisiert sein. Die elektrischen Bauteile 311, 312, 320, 319 bilden zusammen ein Getriebe 309, das insbesondere stufenlos verstellbar ist. In einem solchen Fall ist das Antriebssystem 301 im Wesentlichen aus drei voneinander zu trennenden Bauteilen aufgebaut. Ein Teil ist die Brennkraftmaschine 302 mit der Kurbelwelle 304. Ein weiterer Teil ist die Trennkupplung 347 zusammen mit dem Übertragungsgetriebe 306. Das Summierplanetengetriebe 303 ist in dem Übertragungsgetriebe 306 integriert. Ein weiterer Teil ist die elektrische Einheit, die den Variator 310 bildet. Soll der Verbrennungsmotor abgestellt werden, so kann über die Trennkupplung 347 die Brennkraftmaschine 302 von dem übrigen Antriebsstrang abgetrennt werden. In diesem Fall kann weiterhin über die Festsetzeinrichtung 328 das Hohlrad 315 des Summierplanetengetriebes 303 ebenfalls festgesetzt werden. Die gesamte rotatorische Bewegung entspringt dem Elektromotor 312 und wird über das Sonnenrad 313 auf die Abtriebswelle 317 weitergeleitet. Die Verwendung einer Festsetzeinrichtung 328 erspart die umgekehrte Betriebsweise des Generators 311, d. h., aus dem Generator 311 muss bei einem Stillsetzen des Hohlrads 315 nicht mehr ein Motor gemacht werden. Es können einfachere Generatoren verwendet werden, die ausschließlich in einem Ein-Quadranten-Betriebsbereich verbleiben können.

### Funktionsbeschreibung anhand von Figur 2

### 1. Allgemeines

Das Antriebsystem 1 ist auf der Basis elektrisch mechanischer Leistungsverzweigung wirksam. Über das Übertragungsgetriebe 6 wird die Antriebsleistung von der Brennkraftmaschine 2 über die Übertragungswelle 5 auf die Hohlwelle 24 übersetzt. Zwischen Übertragungswelle 5 und Hohlwelle 24 kann der Schwingungsdämpfer arbeiten. Der Generator 11 ist über die Inverter 19 und 20 mit dem Elektromotor 12 und dem elektrischen Speicher 21 verbunden, wobei durch die elektronische Steuereinrichtung 21 elektrische Leistung über die Inverter 19 und 20 vom Generator 11 zum Elektromotor 12, vom Elektromotor 12 zum Generator 11, übertragen werden, ebenso zum bzw. vom elektrischen Speicher 21. Dadurch ist die Drehzahl des Elektromotors 12 und damit auch das mit dem Elektromotor 12 verbundene Sonnenrad 13 des Summierplanetengetriebes 3 innerhalb gegebener Leistungs- und Drehzahlgrenzen stufenlos veränderbar.

Die Hohlwelle 24 ist unter Zwischenschaltung der Kupplungseinrichtung 25, die lastschaltbar sein kann, mit dem Hohlrad 15 des Summierplanetengetriebes 3 verbunden.

### 2. Anfahrvorgang

Bei laufender Brennkraftmaschine 2 rotiert die Hohlwelle 24 entsprechend der in dem Übertragungsgetriebe 6 festgelegten Übersetzung. Dabei ist die Reibungsbremse 29 geöffnet und der Generator 11 wird angetrieben. Die Kupplungseinrichtung 25 - und die Reibungsbremse 29 - sind geöffnet, weshalb keine Antriebsleistung übertragen wird. Solange das Kraftfahrzeug unbewegt ist, stehen die Abtriebswelle 17 und der mit letzterer gekoppelte Planetenträger 16 still. Durch gezielte Beeinflussung der Inverter 19 und 20 über die elektronische Steuereinrichtung 22 wird die Drehzahl des Elektromotors 12 so eingestellt, dass das Sonnenrad 13 entgegen der Drehrichtung der Abtriebswelle 17 bei Vorwärtsfahrt des Kraftfahrzeugs rotiert. Infolge der mechanischen Koppelung im Summierplanetengetriebe 3 wird dem Hohlrad 15 eine Rotation entgegen der Drehrichtung des Sonnenrads 13 aufgezwungen, dergestalt, dass die Relativdrehzahlen der Anfahrkupplung 26 reduziert werden. Durch Schließen der Anfahrkupplung 26 wird die Hohlwelle 24 mit dem Hohlrad 15 verbunden und der Kraftschluss hergestellt. Das Anfahren des Kraftfahrzeugs erfolgt über die schleifende Anfahrkupplung 26 oder bei ausreichend hoher Drehzahl des Sonnenrads 13 entgegen dem Hohlrad 15, und zwar allein durch Änderung der Drehzahl des Sonnenrads 13. Ein weiches Anfahren ist dadurch erzielbar, dass die Brennkraftmaschine 2 mit niedriger Drehzahl betrieben wird. Nach dem Einkuppelvorgang erfolgt eine kontinuierliche Verstellung der Getriebeübersetzung durch Änderung der Drehzahl des Elektromotors 12 und des damit verbundenen Sonnenrads 13 von relativ hoher Drehzahl in entgegengesetzter Richtung zum Hohlrad 15, d. h., bis zur maximalen Drehzahl in gleicher Richtung wie das besagte Hohlrad 15. Dadurch kann nach dem Einkuppelvorgang dank Veränderung der Drehzahl des Sonnenrads 13 eine kontinuierliche Beschleunigung des Fahrzeugs bis zur Maximalgeschwindigkeit erreicht werden.

Die über das Sonnerad 13 abgenommene Leistung bei Rotation entgegen der Drehrichtung des Hohlrads 15 wird entweder über den Generator 11 wiederum in den mechanischen Zweig zurückgeführt oder in den elektrischen Speicher 21 eingespeist werden.

Im Falle von kritischen Fahrzuständen des Kraftfahrzeugs, einschließlich Notbremsungen, kann der Kraftfluss durch Öffnen der Kupplungseinrichtung 25 unterbrochen werden.

Die Maßnahmen zur Reduktion der Fahrgeschwindigkeit erfolgen umgekehrt zur Beschleunigung.

### 3. Abruf höherer Leistung.

Bei kurzfristig höherem Leistungsbedarf, bspw. Überholen, ist es möglich, dem elektrischen Speicher 21 Energie zu entnehmen und über den Generator 11 als auch über den Elektromotor in das Antriebssystem 1 einzuspeisen, und zwar ohne die Brennkraftmaschine entsprechend auszulegen bzw. zu konzipieren.

### 4. Rückgewinnung der Bremsenergie

Ein Abbremsen des Kraftfahrzeugs ist durch gezielte Steuerung des Elektromotors 12 und des Generators 11 realisierbar. Hierbei wird ein Teil der Bremsenergie in den elektrischen Speicher 21 zurückgeführt.

### 5. Betrieb bei niedrigen Geschwindigkeiten im Rückwärtsgang

Für definierte Kategorien von Kraftfahrzeugen bspw. so genannte schwere Motorräder ist ein Rückwärtsgang erforderlich. Dies ist beim Antriebsystem 1 dadurch möglich, dass das Hohlrad 15 über die Reibungsbremse 29 festsetzbar ist. Das Sonnenrad 13 ist mit dem Elektromotor 12 verbunden, wobei durch Änderung der Drehzahl des Elektromotors 11 das Sonnerad 13 angetrieben wird und das Kraftfahrzeug mit geringer Geschwindigkeit in beiden Fahrtrichtungen - Vorwärts- und Rückwärtsfahrt - bewegt werden kann. Bei ausreichend aufgeladenem elektrischem Speicher 21 kann das Kraftfahrzeug bei geringer Geschwindigkeit sowohl in Vorwärts- wie auch in Rückwärtsrichtung angetrieben werden, ohne die Brennkraftmaschine 2 in Betrieb nehmen zu müssen.

### Bezugszeichenliste

| | | | |
|---|---|---|---|
| 1, 43, 101, 201, 301 | Antriebssystem | 24, 124, 224 | Hohlwelle |
| 2, 102, 202, 302 | Brennkraftmaschine | 24', 124', 224' | Antriebswelle |
| 3, 36, 103, 203, 303 | Summierplanetengetriebe | 25, 30, 230 | Kupplungseinrichtung |
| 4, 104, 204, 304 | Kurbelwelle | 26, 31, 226 | Anfahrkupplung |
| 5, 105, 205, 305 | Übertragungswelle | 27, 327 | Außenseite |
| 6, 34, 106, 206, 306 | Übertragungsgetriebe | 28, 328 | Festsetzeinrichtung |
| 7, 107, 207, 307 | erstes Getrieberad | 29 | Reibungsbremse |
| 8, 33, 108, 208, 308 | zweites Getrieberad | 32 | Überbrückungskupplung |
| 9, 109, 209, 309 | Getriebe | 38 | elektrischer Variator |
| 10, 110, 210, 310 | Variator | 39 | erster Sensor |
| 11, 111, 211, 311 | Generator | 40 | zweiter Sensor |
| 12, 37, 112, 212, 312 | Elektromotor | 41, 141, 241 | Kabel, insbesondere |
| 13, 113, 213, 313 | Sonnenrad | 42, 142, 342 | Kabel, insbesondere zweiadriges Kabel |
| 14, 114 | Planetenrad | 44, 244 | Lamellenkupplung |
| 15, 35, 115, 215, 315 | Hohlrad | 45, 245, 345 | Generatorwelle |
| 16, 116 | Planetenträger | 246 | elektrisches Antriebssystem mit Übersetzungsgetriebe |
| 17, 117, 217, 317 | Abtriebswelle | 247,347 | Trennkupplung |
| 18, 118 | Invertereinrichtung | 52, 252 | Steg |
| 19,119,219,319 | erster Inverter | Al | erster Antriebsstrang |
| 20, 120, 220, 320 | zweiter Inverter | All | zweiter Antriebsstrang |
| 21, 121, 221, 321 | elektrischer Speicher | | |
| 22 | elektronische Steuereinrichtung | | |
| 23, 123, 223, 323 | Lade-/Entladekontrolleinricht ung | | |

## Patentansprüche

1. Antriebssystem (1, 43, 101, 201, 301) für Kraftfahrzeuge,
vorzugsweise motorradartiger Bauart,
umfassend eine Brennkraftmaschine (2, 102, 202, 302) und
ein Summierplanetengetriebe (3, 36, 103, 203, 303),
wobei von der Brennkraftmaschine (2, 102, 202, 302) eine Übertragungswelle (5, 105, 205, 305) weggeführt ist,
die zumindest ein Übertragungsgetriebe (6, 34, 106, 206, 306) mit einem ersten Getrieberad (7, 107, 207, 307) und einem zweiten Getrieberad (8, 33, 108, 208, 308) beeinflusst
und direkt mit dem ersten Getrieberad (7, 107, 207, 307) verbunden ist,
das in das zweite Getrieberad (8, 33, 108, 208, 308) eingreift,
wobei das zweite Getrieberad (8, 33, 108, 208, 308) des Übertragungsgetriebes (6, 34, 106, 206, 306) in Wirkverbindung mit einem Hohlrad des Summierplanetengetriebes (3, 36, 103, 203, 303) steht, das mit einem stufenlosen Getriebe (9, 109, 209, 309) zusammenarbeitet,
wobei
das stufenlose Getriebe (9, 109, 209, 309) als elektrischer Variator (10, 110, 210, 310) mit einem Generator (11, 111, 211, 311) und einem Elektromotor (12, 37, 112, 212, 312) ausgebildet ist, wobei
der Generator (11, 110, 210, 310) mit dem ersten Getrieberad (7, 107, 207, 307) des Übertragungsgetriebes (6, 34, 106, 206, 306) und
der Elektromotor (12, 37, 112, 212, 312) mit einem Sonnenrad (13, 113, 313) des Summierplanetengetriebes (3, 36, 103, 203, 303) gekoppelt ist,
**dadurch gekennzeichnet, dass**
der Generator (11, 110, 210, 310) mit dem ersten Getrieberad (7, 107, 207, 307) unmittelbar an die Übertragungswelle (5, 105, 205) angeschlossen ist.

2. Antriebssystem (1, 43, 101) nach Anspruch 1,
**dadurch gekennzeichnet,**
**dass** das Sonnenrad (13, 113), das insbesondere über eine Antriebswelle (24', 124'), die vorzugsweise von einer Hohlwelle (24, 124) umgeben ist, mit dem, vorzugsweise eine Antriebsleistung liefernden, Elektromotor (12, 37, 112) verbunden ist, mit wenigstens einem Planetenrad (14, 114) kämmt, wobei das Planetenrad (14, 114) von einem Hohlrad (15, 35, 115) umgeben ist und insbesondere mit letzterem in Eingriff steht.

3. Antriebssystem (1, 43, 101) nach Anspruch 1 oder 2,
**dadurch gekennzeichnet, dass**
zwischen Generator (11, 111) und Elektromotor (12, 37, 112) eine Invertereinrichtung (18, 118), die insbesondere einen ersten und einen zweiten Inverter (19, 119, 20, 120) aufweist, angeordnet ist
und vorzugsweise die Invertereinrichtung (18, 118) als Ganzes oder wenigstens einer der Inverter (19, 119, 20, 120) an einem elektrischen Speicher (21, 121) angeschlossen ist.

4. Antriebssystem (1, 43, 101, 201, 301) nach Anspruch 3,
**dadurch gekennzeichnet, dass**
die Inverter (19 und 20, 119 und 120, 219 und 220, 319 und 320) und der elektrische Speicher (21, 121, 221, 321) zur Beeinflussung des Generators (11, 111, 211, 311) und des Elektromotors (12, 37, 112, 212, 312) mit einer elektronischen Steuereinrichtung (22) zusammenwirken, die insbesondere einen Energiefluss durch, alternativ zu und von wenigstens einem der Bauteile (21, 19, 20, 121, 119, 120, 221, 219, 220, 321, 319, 320) elektrischer Speicher (21, 121, 221, 321), erster Inverter (19, 119, 219, 319) und zweiter Inverter (20, 120, 220, 320) steuert,
und vorzugsweise eine Lade-/Entladekontrolleinrichtung (23, 123, 223, 323) in dem Antriebssystem (1, 101, 201, 301) vorhanden ist, die zwischen dem elektrischen Speicher (21, 121, 221, 321) und wenigstens einem der Inverter (19 und 20, 119 und 120, 219 und 220, 319 und 320), vorzugsweise beiden Invertern (19, 20, 119, 120, 219, 220, 319, 320) wirksam ist, zum Beispiel für Ladungs- und Entladungsströme zu dem elektrischen Speicher (21, 121, 221, 321).

5. Antriebssystem (1, 43, 101, 201) nach einem der vorhergehenden Ansprüche 2 bis 4,
**dadurch gekennzeichnet, dass**
die Hohlwelle (24, 124, 224), die insbesondere mit dem zweiten Getrieberad (8, 33, 108, 208) des Übertragungsgetriebes (6, 34, 106, 206) zusammenarbeitet, mit dem Hohlrad (15, 35, 115, 215) des Summierplanetengetriebes (3, 103, 203) verbunden ist und vorzugsweise zwischen Hohlwelle (24, 124, 224) und Hohlrad (15, 35, 115, 215) des Summierplanetengetriebes (3, 36, 103, 203), das insbesondere mit einer Festsetzeinrichtung (28) wie einer Reibungsbremse oder einer Sperrklinkeneinrichtung zusammenarbeitet, eine Kupplungseinrichtung (25, 30, 230) vorgesehen ist.

6. Antriebssystem (1, 43, 101) nach einem der vorhergehenden Ansprüche,
**dadurch gekennzeichnet, dass**
eine Abtriebswelle (17, 117) mit einem Planetenträger (16, 116) für das Planetenrad (14, 114) verbunden ist.

7. Antriebssystem (43) nach Anspruch 5 oder 6,
**dadurch gekennzeichnet, dass**
die Kupplungseinrichtung (30) wenigstens eine der Kupplungen, Anfahrkupplung (31), die vorzugsweise zwischen zweitem Getrieberad (33) des Übertragungsgetriebes (34) und Hohlrad (35) des Summierplanetengetriebes (36) wirksam ist, oder Überbrückungskupplung (32), die vorzugsweise zwischen Elektromotor (37) und zweitem Getrieberad (33) des Übertragungsgetriebes (34) arbeitet, umfasst.

8. Antriebssystem (1, 201) nach einem der vorhergehenden Ansprüche,
insbesondere nach einem der Ansprüche 5 bis 7,
**dadurch gekennzeichnet, dass**
eine Lamellenkupplung (44, 244), die insbesondere aus mehreren, nebeneinander angeordneten Lamellen aufgebaut ist, vorhanden ist, die insbesondere die einzige Kupplungseinrichtung (25, 26, 31, 32, 230) in dem Antriebssystem (1, 201) ist,
wobei sie vorzugsweise zwischen der Übertragungswelle (5, 205), die insbesondere Teil einer Kurbelwelle (4) ist, und dem ersten Getrieberad (7, 207) angeordnet ist, damit vorzugsweise die Brennkraftmaschine (2, 202) von dem restlichen Antriebssystem (246) abkuppelbar ist.

9. Antriebssystem (1, 201, 301) nach einem der Ansprüche 5 bis 8,
**dadurch gekennzeichnet, dass**
der Generator (11, 211, 311) auf einer Generatorwelle (45, 245, 345) sitzt, die von dem Übertragungsgetriebe (6, 34, 206, 306) durch eine Kupplungseinrichtung (26, 30, 31, 32, 230, 330) abkuppelbar ist, wobei die Kupplungseinrichtung insbesondere eine Wechselkupplung ist, durch die eine von zwei abgangsseitigen Wellen an die Generatorwelle kraftschlüssig anzuschließen ist.

10. Antriebssystem nach einem der vorhergehenden Ansprüche,
**dadurch gekennzeichnet, dass**
das Übertragungsgetriebe ein wenigstens vier Getrieberäder umfassendes Übertragungsgetriebe ist, sodass zwischen wenigstens zwei Übersetzungsverhältnissen gewechselt werden kann,
wobei vorzugsweise das zweite und das vierte Getrieberad an der gleichen Welle, insbesondere an einer Hohlwelle, die an das Hohlrad angebunden ist, angreifen.

11. Verfahren zur hybridisierenden Kraftübertragung über ein Antriebssystem (1, 201), nach einem der vorhergehenden Ansprüche,
mit einer Brennkraftmaschine (2, 202), insbesondere als Hauptenergiequelle oder Primärenergiequelle,
das wenigstens zwei Antriebsstränge (AI, All) aufweist, in denen unterschiedliche Drehmomente und Drehzahlen erzeugbar sind,
**dadurch gekennzeichnet, dass**
durch eine Kupplungsstellung wenigstens einer Kupplungseinrichtung (25, 26, 30, 31, 32, 44, 244) des Antriebssystems (1, 201) und über einen durch wenigstens einen Inverter (19, 20, 219, 220) einzustellenden Motorbetriebspunkt eines Elektromotors (12, 212) eine gewünschte Drehzahl und ein gewünschtes Drehmoment an einer Abtriebswelle (17, 217), insbesondere eines Summierplanetengetriebes (3, 203), vorzugsweise durch eine elektronische Steuereinrichtung (22) bestimmt wird,
wobei durch eine Drehzahlveränderung eines Sonnenrades (13, 213) des Summierplanetengetriebes (3, 203) eine sanfte Beschleunigung der Abtriebswelle (17, 217) erfolgt, während die Brennkraftmaschine (2, 202) zunächst in einem gleich bleibenden, insbesondere niedrigtourigen, Drehzahlbereich gehalten wird.

12. Verfahren nach Anspruch 11,
**dadurch gekennzeichnet, dass**
das Summierplanetengetriebe (3, 203) aus zwei Drehmomentenquellen (2, 12, 202, 212), von denen insbesondere eine ein Drehmoment auf das Sonnenrad (13, 213) und eine ein Drehmoment auf ein Hohlrad (15, 215) des Summierplanetengetriebes (3, 203) einleiten kann, zur Abgabe einer Abtriebsleistung über die Abtriebswelle (17, 217, 317), die insbesondere unmittelbar an Stegen (52, 252) des Summierplanetengetriebes (3, 203) angebunden ist, additiv voneinander unterschiedlich zu variierende Drehmomente verbindet.

## Claims

1. Drive system (1, 43, 101, 201, 301) for motor vehicles,
preferably of the motorcycle type of construction,
comprising a combustion engine (2, 102, 202, 302) and
a summation planetary gearing (3, 36, 103, 203, 303),
wherein a transmission shaft (5, 105, 205, 305) is guided away from the combustion engine (2, 102, 202, 302),
which influences at least one transmission gearing (6, 34, 106, 206, 306) with a first gearwheel (7, 107, 207, 307) and a second gearwheel (8, 33, 108,208,308)
and is directly connected with the first gearwheel (7, 107, 207, 307),
which engages into the second gearwheel (8, 33, 108, 208, 308),
wherein the second gearwheel (8, 33, 108, 208, 308) of the transmission gearing (6, 34, 106, 206, 306) is in operative connection with a hollow wheel of the summation planetary gearing (3, 36, 103, 203, 303), which cooperates with a continuously variable gearing (9, 109, 209, 309),
wherein the continuously variable gearing (9, 109, 209, 309) is constructed as an electric variator (10, 110, 210, 310) with a generator (11, 111, 211, 311) and an electric motor (12, 37, 112, 212, 312),
wherein the generator (11, 110, 210, 310) is coupled with the first gearwheel (7, 107, 207, 307) of the transmission gearing (6, 34, 106, 206,306)and
the electric motor (12, 37, 112, 212, 312) is coupled with a sun wheel (13, 113, 313) of the summation planetary gearing (3, 36, 103, 203, 303),
**characterized in that**
the generator (11, 110, 210, 310) with the first gearwheel (7, 107, 207, 307) is connected directly to the transmission shaft (5, 105, 205).

2. Drive system (1, 43, 101) according to Claim 1,
**characterized in that**
the sun wheel (13, 113), which in particular is connected via a drive shaft (24', 124'), which is preferably surrounded by a hollow shaft (24, 124), with the electric motor (12, 37, 112), preferably providing a drive power, meshes with at least one planetary wheel (14, 112), wherein the planetary wheel (14, 114) is surrounded by a hollow wheel (15, 35, 115) and in particular is in engagement with the latter.

3. Drive system (1, 43, 101) according to Claim 1 or 2,
**characterized in that**
between the generator (11, 111) and electric motor (12, 37, 112) an inverter means (18, 118) is arranged, which has in particular a first and a second inverter (19, 119, 20, 120)
and preferably the inverter means (18, 118) as a whole, or at least one of the inverters (19, 119, 20, 120) is connected to an electrical storage means (21, 121).

4. Drive system (1, 43, 101, 201, 301) according to Claim 3,
**characterized in that**
the inverters (19 and 20, 119 and 120, 219 and 220, 319 and 320) and the electrical storage means (21, 121, 221, 321) for influencing the generator (11, 111, 211, 311) and the electric motor (12, 37, 112, 212, 312) cooperate with an electronic control means (22), which in particular controls an energy flow through, alternatively to and from at least one of the components (21, 19, 20, 121, 119, 120, 221, 219, 220, 321, 319, 320) electrical storage means (21, 121, 221, 321), first inverter (19, 119, 219, 319) and second inverter (20, 120, 220, 320),
and preferably a charge/discharge control means (23, 123, 223, 323) is present in the drive system (1, 101, 201, 301), which is effective between the electrical storage means (21, 121, 221, 321) and at least one of the inverters (19 and 20, 119 and 120, 219 and 220, 319 and 320), preferably both inverters (19, 20, 119, 120, 219, 220, 319, 320), for example for charge- and discharge currents to the electrical storage means (21, 121, 221, 321).

5. Drive system (1, 43, 101, 201) according to one of the preceding Claims 2 to 4,
**characterized in that**
the hollow shaft (24, 124, 224), which in particular cooperates with the second gearwheel (8, 33, 108, 208) of the transmission gearing (6, 34, 106, 206), is connected with the hollow wheel (15, 35, 115, 215) of the summation planetary gearing (3, 103, 203) and preferably a clutch means (25, 30, 320) is provided between the hollow shaft (24, 124, 224) and hollow wheel (15, 35, 115, 215) of the summation planetary gearing (3, 36, 103, 203), which in particular cooperates with a fixing means (28) such as a friction brake or a ratchet means.

6. Drive system (1, 43, 101) according to one of the preceding claims,
**characterized in that**
an output shaft (17, 117) is connected with a planet carrier (16, 116) for the planet wheel (14, 114).

7. Drive system (43) according to Claim 5 or 6,
**characterized in that**
the clutch means (30) comprises at least one of the clutches, starting clutch (31), which is preferably effective between the second gearwheel (33) of the transmission gearing (34) and the hollow wheel (35) of the summation planetary gearing (36), or lock-up clutch (32), which preferably operates between the electric motor (37) and the second gearwheel (33) of the transmission gearing (34).

8. Drive system (1, 201) according to one of the preceding claims, in particular according to one of Claims 5 to 7,
**characterized in that**
a multi-plate clutch (44, 244), which is constructed in particular from several plates arranged adjacent to each other, is present, which in particular is the sole clutch means (25, 26, 31, 32, 230) in the drive system (1, 201), wherein it is preferably arranged between the transmission shaft (5, 205), which in particular is part of a crankshaft (4), and the first gearwheel (7, 207), so that preferably the combustion engine (2, 202) is able to be uncoupled from the remaining drive system (246).

9. Drive system (1, 201, 301) according to one of Claims 5 to 8,
**characterized in that**
the generator (11, 211, 311) sits on a generator shaft (45, 245, 345), which is able to be uncoupled from the transmission gearing (6, 34, 206, 306) by a clutch means (26, 30, 31, 32), wherein the clutch means in particular is an interchangeable clutch, by which one of two shafts on the outgoing side is to be connected to the generator shaft in a force-fitting manner.

10. Drive system according to one of the preceding claims,
**characterized in that**
the transmission gearing is a transmission gearing comprising at least four gearwheels, so that a changeover can be made between at least two transmission ratios,
wherein preferably the second and the fourth gearwheel engage on the same shaft, in particular on a hollow shaft, which is connected to the hollow wheel.

11. Method for hybridising power transmission via a drive system (1, 201) according to one of the preceding claims,
with a combustion engine (2, 202), in particular as main energy source or primary energy source,
which has at least two drive chains (AI, All), in which different torques and rotational speeds are able to be produced,
**characterized in that**
by a clutch position at least of one clutch means (25, 26, 30, 31, 32, 44, 244) of the drive system (1, 201) and via a motor operating point of an electric motor (12, 212) which is to be set by at least one inverter (19, 20, 219, 220), a desired rotational speed and a desired torque is determined at an output shaft (17, 217), in particular of a summation planetary gearing (3, 203), preferably by an electronic control means (22),
wherein by a change in rotational speed of a sun wheel (13, 213) of the summation planetary gearing (3, 203) a gentle acceleration of the output shaft (17, 217) takes place, whilst the combustion engine (2, 202) is initially kept in a constant, in particular low-speed, rotational speed range.

12. Method according to Claim 11,
**characterized in that**
the summation planetary gearing (3, 203) of two torque sources (2, 12, 202, 212), of which in particular one can introduce a torque to the sun wheel (13, 213) and one can introduce a torque to a hollow wheel (15, 215) of the summation planetary gearing (3, 203), for delivery of an output power via the output shaft (17, 217, 317), which in particular is connected directly to bars (52, 252) of the summation planetary gearing (3, 203), additively connects torques which are to be varied differently from each other.

## Revendications

1. Système d'entraînement (1, 43, 101, 201, 301) pour véhicules automobiles,
de préférence de construction de type moto,
comprenant un moteur à combustion (2, 102, 202, 302) et
un engrenage planétaire totalisateur (3, 36, 103, 203, 303),
un arbre de transmission (5, 105, 205, 305) étant guidé s'éloignant du moteur à combustion (2, 102, 202, 302),
cet arbre qui influence au moins un engrenage de transmission (6, 34, 106, 206, 306) avec une première roue d'engrenage (7, 107, 207, 307) et une seconde roue d'engrenage (8, 33, 108, 208, 308)
et qui est relié directement à la première roue d'engrenage (7, 107, 207, 307) qui s'engrène dans la seconde roue d'engrenage (8, 33, 108, 208, 308),
la seconde roue d'engrenage (8, 33, 108, 208, 308) de l'engrenage de transmission (6, 34, 106, 206, 306) étant en relation opérationnelle avec une couronne de train planétaire de l'engrenage planétaire totalisateur (3, 36, 103, 203, 303) qui coopère avec un engrenage à réglage continu (9, 109, 209, 309), l'engrenage à réglage continu (9, 109, 209, 309) étant configuré comme un variateur électrique (10, 110, 210, 310) avec un générateur (11, 111, 211, 311) et un moteur électrique (12, 37, 112, 212, 312),
le générateur (11, 111, 211, 311) étant couplé à la première roue d'engrenage (7, 107, 207, 307) de l'engrenage de transmission (6, 34, 106, 206, 306) et
le moteur électrique (12, 37, 112, 212, 312) étant couplé à une roue solaire (13, 113, 313) de l'engrenage planétaire totalisateur (3, 36, 103, 203, 303),
**caractérisé en ce**
**que** le générateur (11, 111, 211, 311) est raccordé avec la première roue d'engrenage (7, 107, 207, 307) directement à l'arbre de transmission (5, 105, 205, 305).

2. Système d'entraînement (1, 43, 101) selon la revendication 1,
**caractérisé en ce**
**que** la roue solaire (13, 113), qui est reliée au moteur électrique (12, 37, 112) qui fournit de préférence une puissance d'entraînement, en particulier par un arbre d'entraînement (24', 124'), qui est entouré de préférence par un arbre creux (24, 124), s'engrène avec au moins une roue planétaire (14, 114), la roue planétaire (14, 114) étant entourée par une couronne de train planétaire (15, 35, 115) et étant, en particulier, en prise avec celle-ci.

3. Système d'entraînement (1, 43, 101) selon la revendication 1 ou 2,
**caractérisé en ce**
**qu'**un dispositif inverseur (18, 118), qui présente en particulier un premier et un second inverseur (19, 119, 20, 120) est placé entre le générateur (11, 111) et le moteur électrique (12, 37, 112)
et de préférence le dispositif inverseur (18, 118) en tant qu'entité ou au moins l'un des inverseurs (19, 119, 20, 120) est raccordé à un accumulateur électrique (21, 121).

4. Système d'entraînement (1, 43, 101) selon la revendication 3,
**caractérisé en ce**
**que** les inverseurs (19 et 20, 119 et 120, 219 et 220, 319 et 320) et l'accumulateur électrique (21, 121, 221, 321) coopèrent, pour influencer le générateur (11, 111, 211, 311) et le moteur électrique (12, 37, 112, 212, 312), avec un dispositif de commande électronique (22) qui commande en particulier un flux d'énergie par, au choix vers et à partir d'au moins l'un des composants (21, 19, 20, 121, 119, 120, 221, 219, 220, 321, 319, 320), accumulateur électrique (21, 121, 221, 321), premier inverseur (19, 119, 219, 319) et second inverseur (20, 1200, 220, 320)
et **qu'**il existe de préférence un dispositif de contrôle de charge/de décharge (23, 123, 223, 323) dans le système d'entraînement (1, 101, 201, 301), dispositif qui est actif entre l'accumulateur électrique (21, 121, 221, 321) et au moins l'un des inverseurs (19 et 20, 119 et 120, 219 et 220, 319 et 320), de préférence les deux inverseurs (19, 20, 119, 120, 219, 220, 319, 320), par exemple pour des courants de charge et de décharge vers l'accumulateur électrique (21, 121, 221, 321).

5. Système d'entraînement (1, 43, 101, 201) selon l'une des revendications précédentes 2 à 4,
**caractérisé en ce**
**que** l'arbre creux (24, 124, 224), qui coopère en particulier avec la seconde roue d'engrenage (8, 33, 108, 208) de l'engrenage de transmission (6, 34, 106, 206), est relié à la couronne de train planétaire (15, 35, 115, 215) de l'engrenage planétaire totalisateur (3, 36, 103, 203) et qu'il est prévu un dispositif de couplage (25, 30, 230) de préférence entre l'arbre creux (24, 124, 224) et la couronne de train planétaire (15, 35, 115, 215) de l'engrenage planétaire totalisateur (3, 36, 103, 203) qui coopère en particulier avec un dispositif de blocage (28) comme un frein à friction ou un dispositif à cliquet d'arrêt.

6. Système d'entraînement (1, 43, 101, 201) selon l'une des revendications précédentes,
**caractérisé en ce**
**qu'**un arbre de sortie (17, 117) est relié à une cage de transmission planétaire (16, 116) pour la roue planétaire (14, 114).

7. Système d'entraînement (43) selon la revendication 5 ou 6,
**caractérisé en ce**
**que** le dispositif d'accouplement (30) comprend au moins l'un des couplages, couplage de démarrage (31), qui est actif de préférence entre la seconde roue de transmission (33) de l'engrenage de transmission (34) et la couronne de train planétaire (35) de l'engrenage planétaire totalisateur (36), ou couplage de verrouillage (32) qui travaille de préférence entre le moteur électrique (37) et la seconde roue de transmission (33) de l'engrenage de transmission (34).

8. Système d'entraînement (1, 201) selon l'une des revendications précédentes, en particulier selon l'une des revendications 5 à 7,
**caractérisé en ce**
**qu'**un embrayage à disques (42, 244), qui est constitué en particulier par plusieurs disques placés l'un à côté de l'autre, qui est en particulier le seul dispositif d'accouplement (25, 26, 31, 32, 230) dans le système d'entraînement, cet embrayage étant placé de préférence entre l'arbre de transmission (5, 205), qui est en particulier une partie d'un vilebrequin (4) et la première roue d'engrenage (7, 207) pour que le moteur à combustion (2, 202) puisse être découplé du reste du système d'entraînement (246).

9. Système d'entraînement (1, 201, 301) selon l'une des revendications 5 à 8,
**caractérisé en ce**
**que** le générateur (11, 211, 311) est placé sur un arbre de générateur (45, 245, 345) qui peut être découplé de l'engrenage de transmission (6, 34, 206, 306) par un dispositif de couplage (26, 30, 31, 32, 230, 330), le dispositif de couplage étant en particulier un couplage alterné par lequel l'un des deux arbres côté sortie peut être raccordé par adhérence à l'arbre du générateur.

10. Système d'entraînement selon l'une des revendications précédentes,
**caractérisé en ce**
**que** l'engrenage de transmission est un engrenage de transmission qui comprend au moins quatre roues de transmission si bien qu'il peut être changé entre au moins deux rapports de vitesses,
de préférence la seconde et la quatrième roues de transmission appliquant sur le même arbre, de préférence sur un arbre ceux qui est relié à la couronne de train planétaire.

11. Procédé pour la transmission de force d'hybridation par un système d'entraînement (1, 201) selon l'une des revendications précédentes,
avec un moteur à combustion (2, 202), en particulier comme source d'énergie principale ou source d'énergie primaire,
qui présente au moins deux chaînes cinématiques (AI, AII) dans lesquelles différents couples de rotation et vitesses de rotation peuvent être générés,
**caractérisé en ce**
**qu'**une vitesse de rotation souhaitée et un couple de rotation souhaité sur un arbre de sortie (17, 217), en particulier d'un engrenage planétaire totalisateur (3, 203), sont déterminés de préférence par un dispositif de commande électronique (22) par une position de couplage d'au moins un dispositif d'accouplement (25, 26, 30, 31, 32, 44, 244) du système d'entraînement (1, 201) et par un point de fonctionnement dynamique de moteur d'un moteur électrique 812, 212) qui doit être réglé par au moins un inverseur (19, 20, 219, 220),
une légère accélération de l'arbre de sortie (17, 217) étant effectuée par une variation de la vitesse de rotation d'une roue solaire (13, 213) de l'engrenage planétaire totalisateur (3, 203) tandis que le moteur à combustion (2, 202) est maintenu tout d'abord dans une plage de vitesse de rotation constante, en particulier à petite vitesse de rotation.

12. Procédé selon la revendication 11,
**caractérisé en ce**
**que** l'engrenage planétaire totalisateur (3, 203) relie de manière additive des couples de rotation qui doivent être variés différemment l'un de l'autre à partir de deux sources de couples de rotation (2, 12, 202, 212), dont en particulier l'une peut introduire un couple de rotation sur la roue solaire (13, 213) et l'autre un couple de rotation sur une couronne de train planétaire (15, 215) de l'engrenage planétaire totalisateur (3, 203), pour fournir une puissance de sortie par l'arbre de sortie (17, 217, 317) qui est relié directement à des traverses de l'engrenage planétaire totalisateur (3, 203).
